# EUROPEAN PATENT APPLICATION

(11) **EP 4 783 524 A1**
(43) Date of publication of application: **29.07.2026**
(21) Application number: 26152047.2
(22) Date of filing: 15.01.2026
(51) Int. Cl.: H04L 12/403

(54) **COMMUNICATION APPARATUS, MANAGEMENT APPARATUS, IN-VEHICLE NETWORK SYSTEM, VEHICLE, COMMUNICATION METHOD, NON-TRANSITORY STORAGE MEDIUM OF COMMUNICATION APPARATUS, AND NON-TRANSITORY STORAGE MEDIUM OF MANAGEMENT APPARATUS**

(30) Priority: 23.01.2025 JP 2025010026
(71) Applicant: Toyota Jidosha Kabushiki Kaisha, Toyota-shi, Aichi-ken 471-8571 (JP)
(72) Inventor: HAYASHI, Kenichiro, Toyota-shi, 471-8571 (JP)
(74) Representative: J A Kemp LLP

(57) **Abstract**

A communication apparatus includes a processing circuit (21) and a storage apparatus (22). The processing circuit is configured to, when a state of a vehicle (40) is switched, apply a size of data set such that a first total amount of data becomes fixed regardless of the state of the vehicle (40) in a predetermined period, as a size of data to be transmitted by an own apparatus, when the size of the data to be transmitted is larger than the applied size, transmit the data after reducing the size of the data to the applied size, and when the size of the data to be transmitted is smaller than the applied size, transmit the data after providing data as padding to the data until the size of the data becomes the applied size.

## Description

### BACKGROUND OF THE INVENTION

### 1. Field of the Invention

The present invention relates to a communication apparatus, a management apparatus, an in-vehicle network system, a vehicle, a communication method, a non-transitory storage medium of the communication apparatus, and a non-transitory storage medium of the management apparatus.

### 2. Description of Related Art

Japanese Patent No. 7526877 (JP 7526877 B) discloses a communication apparatus. The communication apparatus communicates with other communication apparatuses using a physical layer collision avoidance function. Hereinafter, the physical layer collision avoidance function will be referred to as PLCA. PLCA is an abbreviation for physical-layer collision avoidance.

In a network system including a plurality of communication apparatuses having the PLCA, after a beacon signal is transmitted, the communication apparatuses transmit data in the order determined in advance.

### SUMMARY OF THE INVENTION

In an in-vehicle network system, the number of communication apparatuses that can perform communication changes depending on a state of the vehicle. For example, the number of communication apparatuses that can perform communication is different between before an ignition switch of the vehicle is turned on and after the ignition switch is turned on. The beacon signal is transmitted again after an opportunity to transmit data has been provided to all the communication apparatuses that can perform communication. Thus, when the number of communication apparatuses that can perform communication is small, a period with which the beacon signal is transmitted may be shorter than when the number of communication apparatuses that can perform communication is large. In other words, the period with which the beacon signal is transmitted fluctuates as the number of communication apparatuses that can perform communication changes in association with switching of a state of a vehicle.

A first aspect of the present disclosure is a communication apparatus. The communication apparatus enters a state of being able to perform communication with another communication apparatus according to a state of a vehicle and has a physical layer collision avoidance function of transmitting data when there is data to be transmitted when a turn of the own apparatus has come after a beacon signal is sensed. The communication apparatus is an apparatus in an in-vehicle network system including a management apparatus configured to, after transmitting the beacon signal, transmit the beacon signal again when the management apparatus confirms that all the communication apparatuses that are able to perform communication have had turns transmitting data. The communication apparatus includes a processing circuit and a storage apparatus. The processing circuit is configured to, when the state of the vehicle is switched, apply a size of data set such that a first total amount of data becomes fixed regardless of the state of the vehicle in a predetermined period, as a size of data to be transmitted by the own apparatus. The first total amount of the data is an amount of data to be transmitted by all the communication apparatuses that are able to perform communication. The predetermined period is a period from when the beacon signal is transmitted until when the next beacon signal is transmitted. The processing circuit is configured to, when the size of the data to be transmitted is larger than the applied size, transmit the data after reducing the size of the data to the applied size. The processing circuit is configured to, when the size of the data to be transmitted is smaller than the applied size, transmit the data after providing data as padding to the data until the size of the data becomes the applied size.

In the communication apparatus according to the first aspect of the present disclosure, the size of the data to be transmitted by each of the communication apparatuses that are able to perform communication may be determined in advance for a corresponding one of states of the vehicle such that the first total amount of the data becomes fixed regardless of the state of the vehicle in the predetermined period. The storage apparatus may store information indicating the size of the data to be transmitted by each of the communication apparatuses that are able to perform communication, the size of the data being determined in advance for each of the states of the vehicle. The processing circuit may execute, when a state of the vehicle is switched, determining a size of data corresponding to the switched state of the vehicle based on the information stored in the storage apparatus and applying the determined size as the size of the data to be transmitted by the own apparatus.

In the communication apparatus according to the first aspect of the present disclosure, the storage apparatus may store information indicating the number of the communication apparatuses that are able to perform communication for each state of the vehicle. The processing circuit may be configured to, when the state of the vehicle is switched, calculate the number of the communication apparatuses that are able to perform communication in the switched state of the vehicle based on the information stored in the storage apparatus. The processing circuit may be configured to calculate a quotient by dividing an amount of data to be transmitted in one cycle in the in-vehicle network system by the calculated number, as the size of the data to be transmitted by the own apparatus. The processing circuit may apply the calculated size of the data as the size of the data to be transmitted by the own apparatus.

In the communication apparatus according to the first aspect of the present disclosure, the processing circuit may be configured to execute, when there is no data to be transmitted when a turn of the own apparatus has come after the beacon signal is sensed, transmitting dummy data of the applied size.

In the communication apparatus according to the first aspect of the present disclosure, a smallest size among sizes of data determined such that the first total amount of the data becomes fixed regardless of the state of the vehicle may be determined as an upper limit data size. When the size of the data to be transmitted is larger than the upper limit data size, the processing circuit may reduce the size of the data to the upper limit data size. When the upper limit data size is smaller than the applied size of the data, the processing circuit may provide data as padding to the data for which the size is reduced until the size of the data reduced to the upper limit data size becomes the applied size of the data.

In the communication apparatus according to the first aspect of the present disclosure, a value corresponding to a quotient obtained by dividing an amount of data to be transmitted in one cycle in the in-vehicle network system by a maximum value of the number of the communication apparatuses that are able to perform communication may be set as the upper limit data size. When the size of the data to be transmitted is larger than the upper limit data size, the processing circuit may reduce the size of the data to the upper limit data size. When the upper limit data size is smaller than the applied size of the data, the processing circuit may provide data as padding to the data for which the size is reduced until the size of the data reduced to the upper limit data size becomes the applied size of the data.

In the communication apparatus according to the first aspect of the present disclosure, the state of the vehicle may be a power supply state in the vehicle classified in accordance with the number and types of devices to which power is supplied in the vehicle.

A second aspect of the present disclosure is a management apparatus constituting an in-vehicle network system with the communication apparatus according to the first aspect. The management apparatus includes a processing circuit and a storage apparatus. The processing circuit is configured to, after transmitting a beacon signal, transmit the beacon signal again when the management apparatus confirms that all the communication apparatuses that are able to perform communication have had turns transmitting data. The processing circuit is configured to, when a state of a vehicle is switched, set a size of data to be transmitted by the communication apparatus such that a second total amount of data to be transmitted by a plurality of the communication apparatuses in the in-vehicle network system becomes fixed regardless of the state of the vehicle in the predetermined period. The processing circuit is configured to transmit information indicating the set size of the data to the communication apparatus.

In the management apparatus according to the second aspect of the present disclosure, the size of the data to be transmitted by each of the communication apparatuses that are able to perform communication may be determined in advance for a corresponding one of the states of the vehicle such that a first total amount of the data becomes fixed regardless of the state of the vehicle in the predetermined period. The storage apparatus may be configured to store information indicating the size of the data to be transmitted by each of the communication apparatuses that are able to perform communication, the size of the data being determined in advance for each of the states of the vehicle. The processing circuit may be configured to, when the state of the vehicle is switched, determine a size of data corresponding to the switched state of the vehicle based on the information stored in the storage apparatus. The processing circuit may be configured to set the determined size as the size of the data to be transmitted by the communication apparatus.

In the management apparatus according to the second aspect of the present disclosure, the storage apparatus may store information indicating the number of the communication apparatuses that are able to perform communication for each state of the vehicle. The processing circuit may be configured to, when the state of the vehicle is switched, calculate the number of the communication apparatuses that are able to perform communication in the switched state of the vehicle based on the information stored in the storage apparatus. The processing circuit may be configured to calculate a quotient by dividing an amount of data to be transmitted in one cycle in the in-vehicle network system by the calculated number, as the size of the data to be transmitted by each of the communication apparatuses. The processing circuit may be configured to set the calculated size as the size of the data to be transmitted by each of the communication apparatuses.

An in-vehicle network system according to a third aspect of the present disclosure includes a plurality of the communication apparatuses and the management apparatus. A communication apparatus included communication apparatuses enters a state of being able to perform communication with another communication apparatus according to a state of a vehicle and has a physical layer collision avoidance function of transmitting data when there is data to be transmitted when a turn of the own apparatus has come after a beacon signal is sensed. The management apparatus transmits the beacon signal again when the management apparatus confirms that all the communication apparatuses that are able to perform communication have had turns transmitting data after transmitting the beacon signal. Each of the communication apparatuses is configured to, when the state of the vehicle is switched, apply a size of data set such that a total amount of data becomes fixed regardless of the state of the vehicle in a predetermined period, as a size of data to be transmitted by the own apparatus. The predetermined period is a period from when the beacon signal is transmitted until when the next beacon signal is transmitted. The total amount of the data is a total amount of data to be transmitted by all the communication apparatuses that are able to perform communication. Each of the communication apparatuses is configured to, when the size of the data to be transmitted is larger than the applied size, transmit the data after reducing the size of the data to the applied size. Each of the communication apparatuses is configured to, when the size of the data to be transmitted is smaller than the applied size, transmit the data after providing data as padding to the data until the size of the data becomes the applied size.

In the in-vehicle network system according to the third aspect of the present disclosure, when the state of the vehicle is switched, the management apparatus may set the size of data to be transmitted by the communication apparatus such that a second total amount of data becomes fixed regardless of the state of the vehicle in the predetermined period. The management apparatus may be configured to transmit information indicating the set size of the data to the communication apparatus. The second total amount of the data may be a total amount of the data to be transmitted by a plurality of the communication apparatuses in the in-vehicle network system. The communication apparatuses may be configured to apply the size of the data indicated by the information received from the management apparatus as the size of the data to be transmitted by the own apparatus.

A fourth aspect of the present disclosure is a vehicle including the in-vehicle network system according to the third aspect of the present disclosure.

A fifth aspect of the present disclosure is a communication method in an in-vehicle network system including a plurality of communication apparatuses and a management apparatus. The communication apparatus included the plurality of the communication apparatuses enters a state of being able to perform communication with another communication apparatus according to a state of a vehicle and has a physical layer collision avoidance function of transmitting data when there is data to be transmitted when a turn of the own apparatus has come after a beacon signal is sensed. The management apparatus is configured to, after transmitting the beacon signal, transmit the beacon signal again when the management apparatus confirms that all the communication apparatuses that are able to perform communication had have turns transmitting data. The communication method includes, when the state of the vehicle is switched, applying, by the communication apparatus, a size of data set such that a first total amount of data becomes fixed regardless of the state of the vehicle in a predetermined period, as a size of data to be transmitted by the own apparatus, when the size of the data to be transmitted is larger than the applied size, transmitting, by the communication apparatus, the data after reducing the size of the data to the applied size, and when the size of the data to be transmitted is smaller than the applied size, transmitting, by the communication apparatus, the data after providing data as padding to the data until the size of the data becomes the applied size. The predetermined period is a period from when the beacon signal is transmitted until when the next beacon signal is transmitted. The first total amount of the data is a total amount of data to be transmitted by all the communication apparatuses that are able to perform communication.

The communication method according to the fifth aspect of the present disclosure may further include, when the state of the vehicle is switched, setting, by the management apparatus, the size of the data to be transmitted by the communication apparatuses such that a second total amount of data becomes fixed regardless of the state of the vehicle in the predetermined period, and transmitting, by the management apparatus, information indicating the set size of the data to the communication apparatuses. The second total amount of the data may be a total amount of data to be transmitted by a plurality of the communication apparatuses in the in-vehicle network system. The communication apparatus may be configured to apply the size of the data indicated by the information received from the management apparatus as a size of data to be transmitted by the own apparatus when the size of the data to be transmitted by the own apparatus is applied.

A sixth aspect of the present disclosure is a communication program to be executed by a processing circuit of each of communication apparatuses in an in-vehicle network system including a plurality of the communication apparatuses and a management apparatus. The communication apparatus enters a state of being able to perform communication with another communication apparatus according to a state of a vehicle and has a physical layer collision avoidance function of transmitting data when there is data to be transmitted when a turn of the own apparatus has come after a beacon signal is sensed. The management apparatus is configured to, after transmitting the beacon signal, transmit the beacon signal again when the management apparatus confirms that all the communication apparatuses that are able to perform communication have had turns transmitting data. The communication program includes, when the state of the vehicle is switched, applying a size of data set such that a first total amount of data becomes fixed regardless of the state of the vehicle in a predetermined period, as a size of data to be transmitted by the own apparatus, when the size of the data to be transmitted is larger than the applied size, transmitting the data after reducing the size of the data to the applied size, and when the size of the data to be transmitted is smaller than the applied size, transmitting the data after providing data as padding to the data until the size of the data becomes the applied size. The predetermined period is a period from when the beacon signal is transmitted until when the next beacon signal is transmitted. The first total amount of the data is a total amount of data to be transmitted by all the communication apparatuses that are able to perform communication.

A seventh aspect of the present disclosure is a management program to be executed by a processing circuit of a management apparatus in an in-vehicle network system. The management program includes, after transmitting a beacon signal, transmitting the beacon signal again when the management apparatus confirms that all communication apparatuses that are able to perform communication have had turns transmitting data, when a state of a vehicle is switched, setting a size of data to be transmitted by each of the communication apparatuses such that a second total amount of data becomes fixed regardless of the state of the vehicle in the predetermined period, and transmitting information indicating the set size of the data to the communication apparatus according to the first aspect. The second total amount of the data is a total amount of data to be transmitted by a plurality of the communication apparatuses in the in-vehicle network system.

An eighth aspect of the present disclosure is a non-transitory storage medium of each of communication apparatuses in an in-vehicle network system including a plurality of the communication apparatuses and a management apparatus, the non-transitory storage medium storing instructions that are executable by one or more processors included in a processing circuit of each of the communication apparatuses and that cause the one or more processors to perform a first function described below. The communication apparatus enters a state of being able to perform communication with another communication apparatus according to a state of a vehicle and has a physical layer collision avoidance function of transmitting data when there is data to be transmitted when a turn of the own apparatus has come after a beacon signal is sensed. The management apparatus is configured to, after transmitting the beacon signal, transmit the beacon signal again when the management confirms that all the communication apparatuses that are able to perform communication have had turns transmitting data. The first function includes, when the state of the vehicle is switched, applying a size of data set such that a first total amount of data becomes fixed regardless of the state of the vehicle in a predetermined period, as a size of data to be transmitted by the own apparatus, when the size of the data to be transmitted is larger than the applied size, transmitting the data after reducing the size of the data to the applied size, and when the size of the data to be transmitted is smaller than the applied size, transmitting the data after providing data as padding to the data until the size of the data becomes the applied size. The predetermined period is a period from when the beacon signal is transmitted until when the next beacon signal is transmitted. The first total amount of the data is a total amount of the data to be transmitted by all the communication apparatuses that are able to perform communication.

A ninth aspect of the present disclosure is a non-transitory storage medium of a management apparatus in an in-vehicle network system, the non-transitory storage medium storing instructions that are executable by one or more processors included in a processing circuit of the management apparatus and that cause the one or more processors to perform a second function described below. The second function includes, after transmitting a beacon signal, transmitting the beacon signal again when management apparatus confirms that all communication apparatuses that are able to perform communication have had turns transmitting data, when a state of a vehicle is switched, setting a size of data to be transmitted by each of the communication apparatuses such that a second total amount of data becomes fixed regardless of the state of the vehicle in the predetermined period, and transmitting information indicating the set size of the data to the communication apparatus according to the first aspect. The second total amount of the data is a total amount of the data to be transmitted by a plurality of the communication apparatuses in the in-vehicle network system.

According to the communication apparatus, the management apparatus, the in-vehicle network system, the vehicle, the communication method, the communication program, the management program, the non-transitory storage medium of the communication apparatus, and the non-transitory storage medium of the management apparatus described above, it is possible to set a period with which a beacon signal is transmitted in the in-vehicle network system fixed regardless of switching of a state of the vehicle.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a schematic diagram illustrating a configuration of a vehicle including an in-vehicle network system of one embodiment;
FIG. 2 is a view indicating an aspect where data is transmitted in accordance with a physical layer collision avoidance function;
FIG. 3 is a table in which the number of devices that can perform communication, a transmission data size, and an upper limit data size are arranged for each power supply state of a vehicle;
FIG. 4 is a view indicating an aspect where data is transmitted, part (a) illustrates an aspect where data is transmitted in a battery power supply state in a virtual case, part (b) illustrates an aspect where data is transmitted in an accessory power supply state, and part (c) illustrates an aspect where data is transmitted in an ignition power supply state;
FIG. 5 is a view indicating an aspect where data is transmitted in the in-vehicle network system in FIG. 1, part (a) illustrates an aspect where data is transmitted in the battery power supply state, part (b) illustrates an aspect where data is transmitted in the accessory power supply state, and part (c) illustrates an aspect where data is transmitted in the ignition power supply state;
FIG. 6 is a flowchart indicating a flow of a series of processing to be executed by a communication apparatus in FIG. 1 when a state of the vehicle changes;
FIG. 7 is a flowchart indicating a flow of a series of processing to be executed by the communication apparatus in FIG. 1 when a beacon signal is sensed;
FIG. 8 is a view indicating an aspect where the communication apparatus illustrated in FIG. 1 generates transmission data in a first case;
FIG. 9 is a view indicating an aspect where the communication apparatus illustrated in FIG. 1 generates transmission data in a second case;
FIG. 10 is a view indicating an aspect where the communication apparatus illustrated in FIG. 1 generates transmission data in a third case;
FIG. 11 is a flowchart indicating a flow of a series of processing to be executed by a communication apparatus of a first modification when a power supply state of the vehicle changes;
FIG. 12 is a schematic diagram illustrating a configuration of a management apparatus of a second modification;
FIG. 13 is a sequence diagram indicating an aspect of communication in an in-vehicle network system of the second modification;
FIG. 14 is a sequence diagram indicating an aspect of communication in an in-vehicle network system of a third modification; and
FIG. 15 is a view indicating an aspect where data is transmitted in a fourth modification, part (a) illustrates an aspect where data is transmitted in the battery power supply state, part (b) illustrates an aspect where data is transmitted in the accessory power supply state, and part (c) illustrates an aspect where data is transmitted in the ignition power supply state.

### DETAILED DESCRIPTION OF EMBODIMENTS

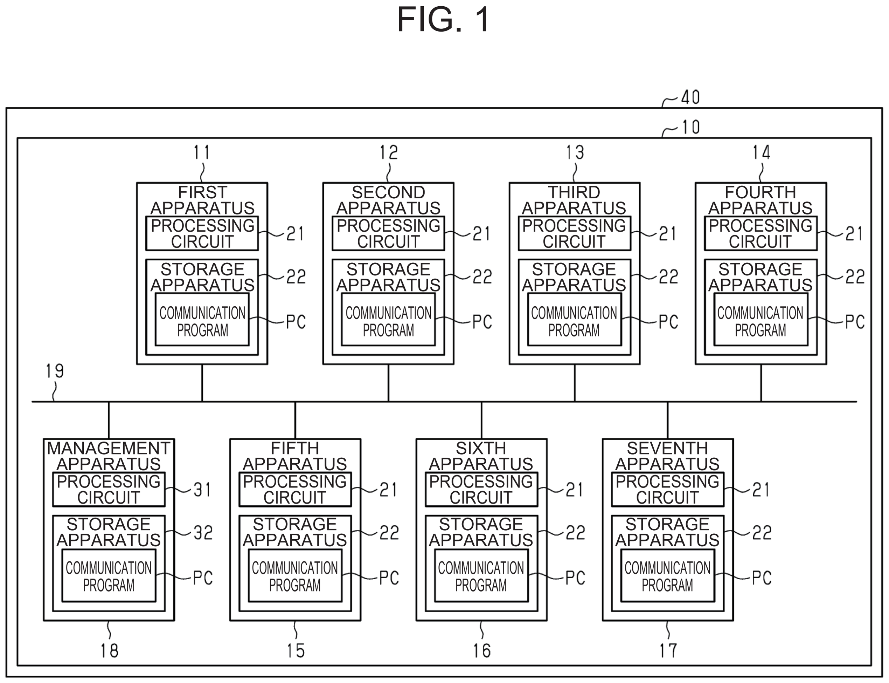

One embodiment of an in-vehicle network system will be described below with reference to FIG. 1 to FIG. 10.

### Configuration of Vehicle 40

As illustrated in FIG. 1, a vehicle 40 includes an in-vehicle network system 10.

The in-vehicle network system 10 includes a plurality of communication apparatuses. The in-vehicle network system 10 includes a first apparatus 11, a second apparatus 12, a third apparatus 13, a fourth apparatus 14, a fifth apparatus 15, a sixth apparatus 16, and a seventh apparatus 17 as the communication apparatuses. In the in-vehicle network system 10, the communication apparatuses are communicably connected to each other through a communication line 19. Each communication apparatus is an electronic control device in the vehicle 40.

Each of the communication apparatuses in the in-vehicle network system 10 includes a processing circuit 21, and a storage apparatus 22. The storage apparatus 22 stores programs. The processing circuit 21 executes various kinds of processing by executing the programs stored in the storage apparatus 22. The processing circuit 21 includes a processor. The processor of the processing circuit 21 may execute the programs stored in the storage apparatus 22.

In the in-vehicle network system 10, the storage apparatus 22 included in each of the communication apparatuses stores a communication program PC. The communication program PC causes the processing circuit 21 to execute processing regarding communication with other communication apparatuses in the in-vehicle network system 10. The communication apparatus implements a communication method in the in-vehicle network system 10 by executing the processing regarding communication with other communication apparatuses. The communication apparatus implements a specific function in the vehicle 40 by performing communication with other communication apparatuses. One example of the storage apparatus 22 is a non-transitory storage medium.

The communication apparatus enters a state of being able to perform communication with other communication apparatuses in the in-vehicle network system 10 according to a state of the vehicle 40. For example, the vehicle 40 puts a communication apparatus that has to be put into a state of being able to perform communication with other communication apparatuses to implement a function corresponding to the state of the vehicle 40, into a state of being able to perform communication with other communication apparatuses. On the other hand, for example, the vehicle 40 does not put a communication apparatus that does not need to perform communication with other communication apparatuses to implement the function corresponding to the state of the vehicle 40, into a state of being able to perform communication with other communication apparatuses. Thus, the number and types of communication apparatuses that can perform communication in the in-vehicle network system 10 differ depending on the state of the vehicle 40.

As illustrated in FIG. 1, the in-vehicle network system 10 includes a management apparatus 18. The management apparatus 18 is communicably connected to the communication apparatuses in the in-vehicle network system 10 through the communication line 19. The management apparatus 18 is an electronic control device in the vehicle 40.

The management apparatus 18 includes a processing circuit 31 and a storage apparatus 32. The storage apparatus 32 stores programs. The processing circuit 31 executes various kinds of processing by executing the programs stored in the storage apparatus 32. The processing circuit 31 includes a processor. The processor of the processing circuit 31 may execute various kinds of processing by executing the programs stored in the storage apparatus 32.

The storage apparatus 32 included in the management apparatus 18 stores the communication program PC in a similar manner to the storage apparatus 22. The communication program PC causes the processing circuit 31 to execute processing regarding communication with other communication apparatuses in the in-vehicle network system 10. The management apparatus 18 implements a communication method in the in-vehicle network system 10 by executing the processing regarding communication with other communication apparatuses. One example of the storage apparatus 32 is a non-transitory storage medium.

The management apparatus 18 transmits a beacon signal BS. The beacon signal BS is a signal that becomes a rough indication of a timing for the communication apparatus transmitting data to other communication apparatuses.
In the in-vehicle network system 10, the management apparatus 18 also has a function as a communication apparatus in addition to a function of transmitting the beacon signal BS. In other words, the management apparatus 18 implements a specific function in the vehicle 40 by performing communication with other communication apparatuses in the in-vehicle network system 10. In this event, the management apparatus 18 transmits data at a right timing for transmitting data using the beacon signal BS as a rough indication in a similar manner to other communication apparatuses.

### Outline of Physical Layer Collision Avoidance Function

In the in-vehicle network system 10, each of the communication apparatuses has a physical layer collision avoidance function (PLCA). Hereinafter, the physical layer collision avoidance function will be referred to as PLCA.

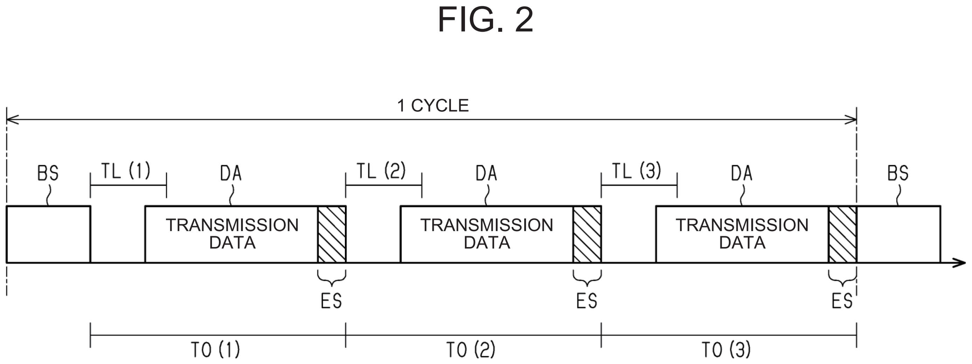

Outline of the PLCA will be described below with reference to FIG. 2. FIG. 2 indicates an aspect where a plurality of devices having the PLCA performs communication in accordance with the PLCA. The communication in accordance with the PLCA is performed in a network system including a plurality of devices having the PLCA and a device that transmits the beacon signal BS. Hereinafter, the device having the PLCA and the device that transmits the beacon signal BS will be collectively referred to as a device in the network system.

The device having the PLCA transmits data using the beacon signal BS as a rough indication when communication is performed. The order in which the devices having the PLCA transmit data after the beacon signal is transmitted is determined in advance. After the beacon signal BS is transmitted, the devices having the PLCA transmit data in the order determined in advance.

FIG. 2 indicates an aspect where data is transmitted within one cycle in the network system. The cycle is a period after the beacon signal BS is transmitted until an opportunity to transmit data is sequentially provided to all the devices having the PLCA and capable of performing communication in the network system, and transmission of data by the last device having the PLCA is completed. In a case of FIG. 2, three devices having the PLCA are in a state of being able to perform communication in the network system.

In FIG. 2, time passes from a left side to a right side. As indicated in FIG. 2, when the cycle is started, first, the device that transmits the beacon signal BS transmits the beacon signal BS.

FIG. 2 indicates a time limit TL and transmission data DA in addition to the beacon signal BS. The transmission data DA is data to be transmitted by the device having the PLCA. When transmission of the transmission data DA is not started during the time limit TL, an opportunity for the device to transmit the transmission data DA ends. Then, a turn to transmit the transmission data DA shifts to the next device.

In FIG. 2, a number is assigned to each time limit TL. The number indicates the order in which the time limit TL to which the number is assigned is started after the beacon signal BS is transmitted. A time limit TL(1) indicated in FIG. 2 indicates the time limit TL started first in the cycle after the beacon signal BS is transmitted. A time limit TL(2) indicated in FIG. 2 indicates the time limit TL started second in the cycle after the beacon signal BS is transmitted. A time limit TL(3) indicated in FIG. 2 indicates the time limit TL started third in the cycle after the beacon signal BS is transmitted.

In one cycle, the order allocated to the devices having the PLCA corresponds to the order of the time limits TL.
The device in the network system determines that a transmission opportunity TO is provided to a device to which the first order is allocated when the beacon signal BS is sensed. At the same time, the device to which the first order is allocated determines that a turn of the own device to transmit data has come.

When the device to which the first order is allocated determines that a turn of the device has come, and when there is data to be transmitted, the device starts transmitting the transmission data DA within the time limit TL (1).
As indicated in FIG. 2, the device to which the first order is allocated transmits the transmission data DA including an end signal ES at the end of the transmission data DA. The end signal ES is a signal indicating that the device that is transmitting the transmission data DA has completed transmission of the transmission data DA. At a time point at which the device to which the first order is allocated transmits the end signal ES, the transmission opportunity TO of the device to which the first order is allocated ends. FIG. 2 indicates a period during which the transmission opportunity TO is provided to the device to which the first order is allocated, as a transmission opportunity TO(1).

There is a case where the device having the PLCA has no data to be transmitted when a turn of the device to transmit data has come. The device to which the first order is allocated cannot start transmitting the transmission data DA within the time limit TL(1) when there is no data to be transmitted. In this case, the transmission opportunity TO(1) of the device to which the first order is allocated ends as a result of elapse of the time limit TL(1) without the transmission data DA being transmitted.

The device in the network system determines that the transmission opportunity TO(1) ends when the end signal ES transmitted by the device to which the first order is allocated is sensed. The device in the network system determines that the transmission opportunity TO(1) of the device ends when the time limit TL(1) has elapsed without the transmission data DA being transmitted by the device to which the first order is allocated.

The device in the network system determines that the transmission opportunity TO is provided to a device to which the second order is allocated when the transmission opportunity TO(1) of the device to which the first order is allocated ends. At the same time, the device to which the second order is allocated determines that a turn of the device to transmit data has come.

When the device determines that a turn of the device has come, and when there is data to be transmitted, the device to which the second order is allocated starts transmitting the transmission data DA within the time limit TL(2).
As indicated in FIG. 2, the device to which the second order is allocated transmits the transmission data DA including the end signal ES at the end of the transmission data DA. At a time point at which the device to which the second order is allocated transmits the end signal ES, the transmission opportunity TO of the device to which the second order is allocated ends. FIG. 2 indicates a period during which the transmission opportunity TO is provided to the device to which the second order is allocated, as the transmission opportunity TO(2).

The device to which the second order is allocated cannot start transmitting the transmission data DA within TO(2) when there is no data to be transmitted. In this case, the transmission opportunity TO(2) of the device to which the second order is allocated ends as a result of elapse of the time limit TL(2) without the transmission data DA being transmitted.

The device in the network system determines that the transmission opportunity TO(2) of the device ends when the end signal ES transmitted from the device to which the second order is allocated is sensed. The device in the network system determines that the transmission opportunity TO(2) of the device ends when the time limit TL(2) has elapsed without the transmission data DA being transmitted by the device to which the second order is allocated.

The device in the network system determines that the transmission opportunity TO is provided to a device to which the third order is allocated when the transmission opportunity TO(2) of the device to which the second order is allocated ends. At the same time, the device to which the third order is allocated determines that a turn of the own device to transmit data has come.

When the device to which the third order is allocated determines that a turn of the device has come, the device starts transmitting the transmission data DA within the time limit TL(3) when there is data to be transmitted.
As indicated in FIG. 2, the device to which the third order is allocated transmits the transmission data DA including the end signal ES at the end of the transmission data DA. At a time point at which the device to which the third order is allocated transmits the end signal ES, the transmission opportunity TO of the device to which the third order is allocated ends. FIG. 2 indicates a period during which the transmission opportunity TO is provided to the device to which the third order is allocated, as a transmission opportunity TO(3).

The device to which the third order is allocated cannot start transmitting the transmission data DA within the time limit TL(3) when there is no data to be transmitted. In this case, the transmission opportunity TO(3) of the device to which the third order is allocated ends as a result of elapse of the time limit TL(3) without the transmission data DA being transmitted.

When the transmission opportunity TO of the device having the PLCA to which the last order is allocated among the devices having the PLCA ends, one cycle ends. In FIG. 2, when the transmission opportunity TO(3) of the device to which the third order is allocated ends, one cycle ends.

The device that transmits the beacon signal BS determines that one cycle has ended when end of the transmission opportunity TO is detected the number of times equal to the number of devices that can perform communication.
As indicated in FIG. 2, the device that transmits the beacon signal BS transmits the beacon signal BS again when the device determines that one cycle has ended.

In this manner, the device having the PLCA transmits the transmission data DA in the order determined in advance at a right timing using the beacon signal BS as a rough indication. By this means, in the network system including the devices having the PLCA, collision of the transmission data DA is suppressed.

### Outline of State of Vehicle 40

In the in-vehicle network system 10, the state of the vehicle 40 specifically refers to a power supply state of the vehicle 40. The power supply state of the vehicle 40 is classified in accordance with the number and types of devices to which power is supplied in the vehicle 40.

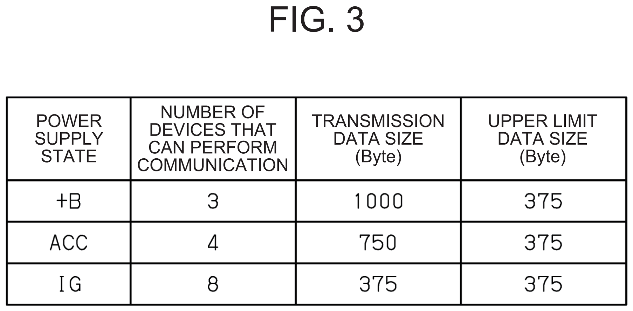

FIG. 3 indicates a specific example of combinations of a type of a power supply state of the vehicle 40, and the number of devices that can perform communication for each type of the power supply state, in a table. The devices that can perform communication are communication apparatuses that are put into a state of being able to perform communication in each power supply state.

FIG. 3 indicates a battery power supply state (+B), an accessory power supply state (ACC), and an ignition power supply state (IG) as examples of the power supply state of the vehicle 40.
The battery power supply state is a power supply state when a switch of a system of the vehicle 40 is turned off. In the battery power supply state, for example, power is supplied to a clock, and the like, included in the vehicle 40. As indicated in FIG. 3, the number of devices that can perform communication in the battery power supply state is three.

The accessory power supply state is a power supply state when the switch of the system of the vehicle 40 is in an ACC state. In the accessory power supply state, for example, power is supplied to a car multimedia apparatus, a car navigation apparatus, and the like, included in the vehicle 40, in addition to the clock described above. As indicated in FIG. 3, the number of devices that can perform communication in the accessory power supply state is four.

The ignition power supply state is a power supply state when the switch of the system of the vehicle 40 is turned on. In the ignition power supply state, for example, power is supplied to a control apparatus of an engine included in the vehicle 40, a motor pump for coolant, and the like, in addition to the clock and the car multimedia apparatus described above. As indicated in FIG. 3, the number of devices that can perform communication in the ignition power supply state is eight.

### Aspect of Communication in Virtual Case

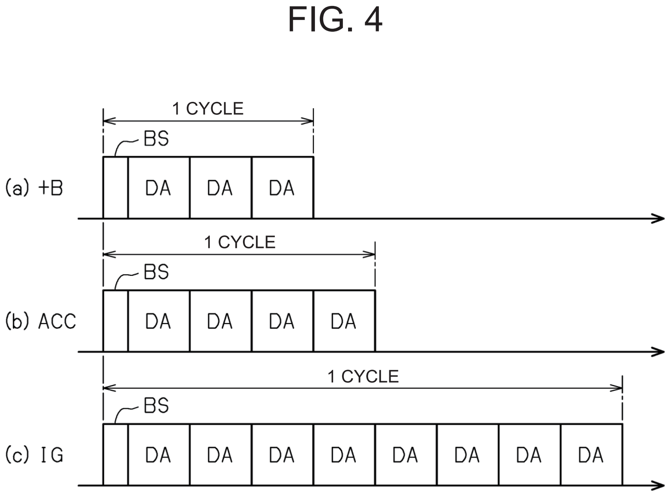

As described with reference to FIG. 3, in the in-vehicle network system 10, the number of communication apparatuses that are put into a state of being able to perform communication is different depending on the power supply state of the vehicle 40. FIG. 4 indicates an aspect where the communication apparatuses in the in-vehicle network system 10 transmit data in accordance with the PLCA, for each power supply state of the vehicle 40 in a virtual case.

In the virtual case, all the communication apparatuses that can perform communication in the in-vehicle network system 10 transmit the transmission data DA. In the virtual case, all the communication apparatuses in the in-vehicle network system 10 transmit data of the same size.

In FIG. 4, time passes from a left side to a right side in a similar manner to FIG. 2.
In FIG. 4, a rectangle to which a reference sign "DA" is assigned indicates the transmission data DA. In FIG. 4, an area of the rectangle is larger as a size of data is larger. In the virtual case, the communication apparatuses transmit the transmission data DA of the same size, and thus, sizes of all the rectangles indicating the transmission DA are the same in FIG. 4. Further, in FIG. 4, sizes of rectangles indicating the beacon signals BS are also the same.

In part (a) of FIG. 4, the beacon signal BS and the transmission data DA to be transmitted within one cycle in the battery power supply state are indicated. As indicated in FIG. 3, the number of communication apparatuses that can perform communication in the battery power supply state is three. Thus, in part (a) of FIG. 4, three pieces of transmission data DA are indicated.

In part (b) of FIG. 4, the beacon signal BS and the transmission data DA to be transmitted within one cycle in the accessory power supply state are indicated. As indicated in FIG. 3, the number of communication apparatuses that can perform communication in the accessory power supply state is four. Thus, in part (b) of FIG. 4, four pieces of transmission data DA are indicated.

In part (c) of FIG. 4, the beacon signal BS and the transmission data DA to be transmitted within one cycle in the ignition power supply state are indicated. As indicated in FIG. 3, the number of communication apparatuses that can perform communication in the ignition power supply state is eight. Thus, in part (c) of FIG. 4, eight pieces of transmission data DA are indicated.

In the in-vehicle network system 10, a period required for the communication apparatus to transmit data becomes larger in proportion to a size of data to be transmitted.
When sizes of data to be transmitted are the same, periods required for transmitting the data are the same. When sizes of data to be transmitted by the communication apparatuses are the same, a length of one cycle becomes longer as the number of communication apparatuses that transmit the data is larger. Thus, as indicated in FIG. 4, the length of one cycle becomes longer for a power supply state in which the number of communication apparatuses that can perform communication is larger.

In this manner, in the in-vehicle network system 10, the number of communication apparatuses that can perform communication changes in accordance with the state of the vehicle 40, and thus, the length of one cycle changes in accordance with the state of the vehicle 40. The beacon signal BS is transmitted every time one cycle ends. Thus, when the length of one cycle changes, a period with which the beacon signal BS is transmitted changes.

It can be considered that a size of the transmission data DA to be transmitted by each communication apparatus is different for each one cycle. In this case, even if the state of the vehicle 40 is the same, the length of one cycle becomes different for each cycle. In other words, in the in-vehicle network system 10, a period with which the beacon signal BS is transmitted changes also by the size of the transmission data DA to be transmitted by each communication apparatus.

Further, as described above, the device having the PLCA does not transmit the transmission data DA when there is no data to be transmitted when a turn of the own device to transmit data has come. Thus, in the in-vehicle network system 10, when there is a communication apparatus that does not transmit the transmission data DA during the cycle, the length of one cycle becomes short by an amount corresponding to the transmission data DA being not transmitted. In this manner, in the in-vehicle network system 10, the period with which the beacon signal BS is transmitted changes also depending on whether or not the communication apparatus transmits the transmission data DA.

### Aspect of Communication in Present Embodiment

The communication apparatus according to the present embodiment transmits data such that the period with which the beacon signal BS is transmitted becomes fixed regardless of the state of the vehicle 40.

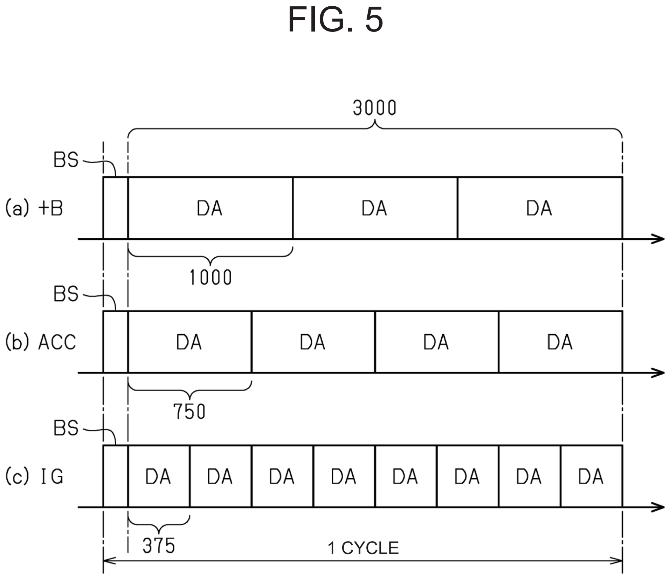

FIG. 5 indicates an aspect where the communication apparatuses of the present embodiment transmit data in the in-vehicle network system 10 for each power supply state of the vehicle 40. In FIG. 5, time passes from a left side to a right side in a similar manner to FIG. 2 and FIG. 4.

In FIG. 5, a rectangle to which a reference sign "DA" is assigned indicates the transmission data DA. In FIG. 5, an area of the rectangle is larger as a size of the data is larger. In FIG. 5, sizes of the rectangles indicating the beacon signals BS are the same.

In FIG. 5, in a similar manner to the virtual case, all the communication apparatuses that can perform communication in the in-vehicle network system 10 transmit the transmission data DA.
In part (a) of FIG. 5, the beacon signal BS and the transmission data DA to be transmitted within one cycle in the battery power supply state are indicated. As indicated in FIG. 3, the number of communication apparatuses that can perform communication in the battery power supply state is three. Thus, in part (a) of FIG. 5, three pieces of transmission data DA are indicated.

In part (b) of FIG. 5, the beacon signal BS and the transmission data DA to be transmitted within one cycle in the accessory power supply state are indicated. As indicated in FIG. 3, the number of communication apparatuses that can perform communication in the accessory power supply state is four. Thus, in part (b) of FIG. 5, four pieces of transmission data DA are indicated.

In part (c) of FIG. 5, the beacon signal BS and the transmission data DA to be transmitted within one cycle in the ignition power supply state are indicated. As indicated in FIG. 3, the number of communication apparatuses that can perform communication in the ignition power supply state is eight. Thus, in part (c) of FIG. 5, eight pieces of transmission data DA are indicated.

In FIG. 5, sizes of the respective pieces of the transmission data DA are indicated. In part (a) of FIG. 5, a size of the transmission data DA is 1000 bytes per one piece. In part (b) of FIG. 5, a size of the transmission data DA is 750 bytes per one piece. In part (c) of FIG. 5, a size of the transmission data DA is 375 bytes per one piece. Thus, as indicated in FIG. 5, total amounts of the transmission data DA to be transmitted in the respective power supply states become equal and 3000 bytes. As a result, as indicated in FIG. 5, the length of one cycle becomes fixed regardless of the state of the vehicle 40.

### Outline of Transmission Data Size

In the in-vehicle network system 10, to implement communication in the aspect as indicated in FIG. 5, the transmission data size is set.

FIG. 3 indicates the transmission data size of each communication apparatus for each power supply state of the vehicle 40. The transmission data size is a size of the transmission data DA to be transmitted by each of the communication apparatuses that can perform communication in the in-vehicle network system 10, the size being set for each state of the vehicle 40.

The transmission data size is set such that a total amount of data to be transmitted by all the communication apparatuses that can perform communication becomes fixed regardless of the state of the vehicle 40 in a period from when the beacon signal BS is transmitted until when the next beacon signal BS is transmitted.

The transmission data size is determined in advance for each state of the vehicle 40 such that such a condition is satisfied. Each of the communication apparatuses in the in-vehicle network system 10 stores information indicating the transmission data size for each state of the vehicle 40 determined in advance. In other words, the communication apparatuses from the first apparatus 11 to the seventh apparatus 17 store information indicating the transmission data size for each state of the vehicle 40 in the storage apparatus 22. Further, the management apparatus 18 stores information indicating the transmission data size for each state of the vehicle 40 in the storage apparatus 32.

### Outline of Upper Limit Data Size

As indicated in FIG. 3, in the in-vehicle network system 10, an upper limit data size is set. The upper limit data size is an upper limit of a size of data that can be transmitted to other communication apparatuses as valid data among the transmission data DA.

As indicated in FIG. 3 and FIG. 5, the transmission data size that is a size of data to be transmitted by the communication apparatus is different for each state of the vehicle 40. On the other hand, if a size of data to be transmitted as valid data in one communication is different for each state of the vehicle 40, processing of the communication apparatus that receives the data becomes complicated. Thus, in the in-vehicle network system 10, the size of the data to be transmitted by each communication apparatus is different for each state of the vehicle 40, but a uniform upper limit is provided to the size of the data to be transmitted as valid data among the transmitted data.

As indicated in FIG. 3, the upper limit data size is 375 bytes. This is the same size as the transmission data size in the ignition power supply state. In the in-vehicle network system 10, the transmission data size in the ignition power supply state is a minimum size among the transmission data sizes determined for each state of the vehicle 40. In other words, in the in-vehicle network system 10, the minimum size among the transmission data sizes determined for each state of the vehicle 40 is determined as the upper limit data size. Thus, in the ignition power supply state, the size of the data to be transmitted by the communication apparatus is not limited by the upper limit data size.

In the in-vehicle network system 10, an amount of data except an amount of the beacon signal BS to be transmitted in one cycle is 3000 bytes. A maximum number of communication apparatuses that can perform communication in the in-vehicle network system 10 is eight in the ignition power supply state, which is the largest among the power supply states of the vehicle 40. 375 bytes that is the transmission data size in the ignition power supply state is a quotient obtained by dividing 3000 bytes that is the amount of data except the amount of the beacon signal BS to be transmitted in one cycle by eight that is a maximum value of the number of communication apparatuses that can perform communication. In this manner, in the in-vehicle network system 10, a value corresponding to the quotient obtained by dividing the amount of data to be transmitted in one cycle by the maximum value of the number of communication apparatuses that can perform communication is set as the upper limit data size.

### Aspect of Processing to Be Executed by Communication Apparatuses When State of Vehicle 40 Is Switched.

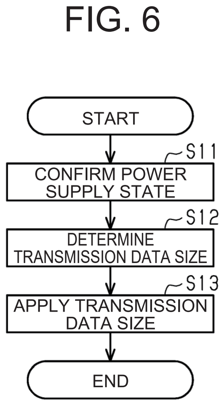

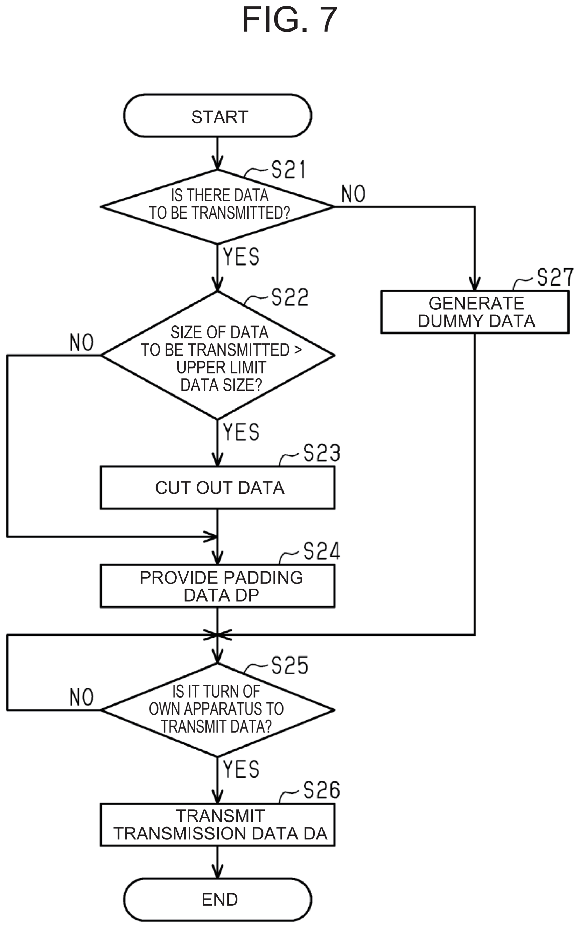

FIG. 6 and FIG. 7 indicate a flow of a series of processing to be executed by each of the communication apparatuses in the in-vehicle network system 10 to implement communication in the aspect as indicated in FIG. 5.

The series of processing indicated in FIG. 6 and FIG. 7 is executed by the processing circuit included in each of the communication apparatuses executing the communication program PC stored in the storage apparatus. When one of the first apparatus 11 to the seventh apparatus 17 executes the series of processing indicated in FIG. 6 and FIG. 7, the series of processing indicated in FIG. 6 and FIG. 7 is executed by the processing circuit 21 executing the communication program PC stored in the storage apparatus 22. When the management apparatus 18 executes the series of processing indicated in FIG. 6 and FIG. 7, the series of processing indicated in FIG. 6 and FIG. 7 is executed by the processing circuit 31 executing the communication program PC stored in the storage apparatus 32.

The series of processing indicated in FIG. 6 is executed when the state of the vehicle 40 is switched, by the communication apparatuses that can perform communication in the switched state of the vehicle 40. The communication apparatuses that can perform communication in the switched state of the vehicle 40 include a communication apparatus that becomes able to perform communication when the state of the vehicle 40 is switched, and a communication apparatus in a state of being able to perform communication which is continued when the state of the vehicle 40 is switched.

The communication apparatus that becomes able to perform communication when the state of the vehicle 40 is switched executes the series of processing indicated in FIG. 6 when the communication apparatus enters a state of being able to perform communication with other communication apparatuses.
The communication apparatus in a state of being able to perform communication which is continued when the state of the vehicle 40 is switched executes the series of processing indicated in FIG. 6 when switching of the state of the vehicle 40 is sensed.

There is a case where power is supplied to the communication apparatus from another power line in accordance with the state of the vehicle 40. In this case, the communication apparatus senses switching of the state of the vehicle 40 when the power line that supplies power is switched.

There is a case where the communication apparatus can grasp a current state of the vehicle 40 from content of communication with other communication apparatuses in the in-vehicle network system 10. In this case, the communication apparatus senses switching of the state of the vehicle 40 based on the content of communication with other communication apparatuses.

The communication apparatus that has started the series of processing indicated in FIG. 6 first executes processing in step S11. In the processing in step S11, the communication apparatus confirms the switched power supply state of the vehicle 40 among the power supply states.

When power is supplied from another power line in accordance with the state of the vehicle 40, the communication apparatus confirms the switched power supply state based on the power line through which the power is supplied. For example, when power is supplied from the power line through which power is supplied in the battery power supply state, the communication apparatus determines that the switched power supply state is the battery power supply state.

When the current state of the vehicle 40 can be grasped from content of communication with other communication apparatuses in the in-vehicle network system 10, the communication apparatus confirms the switched power supply state based on the content of communication with other communication apparatuses.

The processing of the communication apparatus that has confirmed the switched power supply state proceeds to step S12.
In the processing in step S12, the communication apparatus determines the transmission data size corresponding to the switched state of the vehicle 40.

As described above, each of the communication apparatuses in the in-vehicle network system 10 stores information indicating the transmission data size for each state of the vehicle 40 determined in advance.
In the processing in step S12, the communication apparatus refers to the stored information indicating the transmission data size. Then, the communication apparatus determines the transmission data size corresponding to the switched state of the vehicle 40 based on the information indicating the transmission data size and the switched power supply state confirmed in step S11. Then, the processing of the communication apparatus proceeds to step S13.

In the processing in step 13, the communication apparatus applies the transmission data size determined in the processing in step S12 as a size of data to be transmitted by the own apparatus in the switched state of the vehicle 40. Then, the communication apparatus ends the series of processing indicated in FIG. 6.

### Aspect of Processing to Be Executed by Communication Apparatus When Beacon Signal BS Is Sensed

Each of the communication apparatuses that can perform communication in the in-vehicle network system 10 executes the series of processing indicated in FIG. 7 when the beacon signal BS is sensed.

As indicated in FIG. 7, the communication apparatus that has sensed the beacon signal BS first executes processing in step S21. In the processing in step S21, the communication apparatus determines whether there is data to be transmitted to other communication apparatuses. When the communication apparatus has generated data to be transmitted when a turn of the own apparatus to transmit data has come at a time point of execution of the processing in step S21, it is determined that there is data to be transmitted.

When it is determined that there is data to be transmitted by the own apparatus in the processing in step S21 (step S21: Yes), the processing proceeds to step S22. In the processing in step S22, the communication apparatus determines whether a size of the data to be transmitted is larger than the upper limit data size. In this event, the communication apparatus compares the size of the generated data with the upper limit data size.

When it is determined that the size of the data to be transmitted is larger than the upper limit data size in the processing in step S22 (step S22: Yes), the processing of the communication apparatus proceeds to step S23. In the processing in step S23, the communication apparatus executes cutout of the data to be transmitted. In the processing in step S23, the communication apparatus cuts out data from the generated data. An aspect where the communication apparatus cuts out data will be described later.

After the communication apparatus cuts out the data, the communication apparatus executes processing in step S24. Further, also when it is determined that the size of the data to be transmitted is equal to or smaller than the upper limit data size in the processing in step S22 (step S22: No), the processing of the communication apparatus proceeds to step S24.

In the processing in step S24, the communication apparatus provides padding data DP to the data to be transmitted. The padding data DP is data as padding to be provided such that the size of the data to be transmitted by the communication apparatus becomes the transmission data size corresponding to the state of the vehicle 40. In other words, the padding data DP is data as padding to be provided such that the size of the data to be transmitted by the communication apparatus becomes the size applied in the processing in step S13 in FIG. 6. An aspect where the communication apparatus provides the padding data DP will be described later.

The communication apparatus generates the transmission data DA from the generated data through the processing in step S23 and the processing in step S24. The communication apparatus generates the transmission data DA of the same size as the transmission data size corresponding to the state of the vehicle 40 applied in the processing in step S13 in FIG. 6 through the processing in step S23 and the processing in step S24. Note that when the size of the generated data is originally equal to the applied size, neither cutout of the data (step S23) nor provision of the padding data DP (step S24) is performed.

When it is determined that there is no data to be transmitted by the own apparatus in the processing in step S21 (step S21: No), the processing proceeds to step S27. In the processing in step S27, the communication apparatus generates dummy data. The dummy data is the transmission data DA including only the padding data DP. In this event, the communication apparatus generates the dummy data of the same size as the transmission data size corresponding to the state of the vehicle 40 applied in the processing in step S13 in FIG. 6.

After the communication apparatus executes the processing in step S24 or the processing in step S27, the processing proceeds to step S25. In the processing in step S25, the communication apparatus determines whether a turn of the own apparatus to transmit data has come after the beacon signal BS had been transmitted in the in-vehicle network system 10.

When it is determined in the processing in step S25 that a turn of the own apparatus to transmit data has not come (step S25: No), the communication apparatus executes the processing in step S25 again. In other words, the communication apparatus repeats the processing in step S25 until the turn of the own apparatus to transmit data comes.

When it is determined in the processing in step S25 that the turn of the own apparatus to transmit data has come (step S25: Yes), the processing of the communication apparatus proceeds to step S26.
In the processing in step S26, the communication apparatus transmits the transmission data DA. When it is determined in the processing in step S21 that there is data to be transmitted by the own apparatus (step S21: Yes), the communication apparatus transmits the transmission data DA generated through the processing in step S23 and step S24. Further, when it is determined in the processing in step S21 that there is no data to be transmitted by the own apparatus (step S21: No), the communication apparatus transmits the dummy data generated through the processing in step S27. Thus, in the in-vehicle network system 10, all the communication apparatuses that can perform communication transmit the transmission data during a cycle. The communication apparatus that has transmitted the transmission data DA ends the series of processing indicated in FIG. 7.

### Aspect Where Communication Apparatus Generates Transmission Data DA

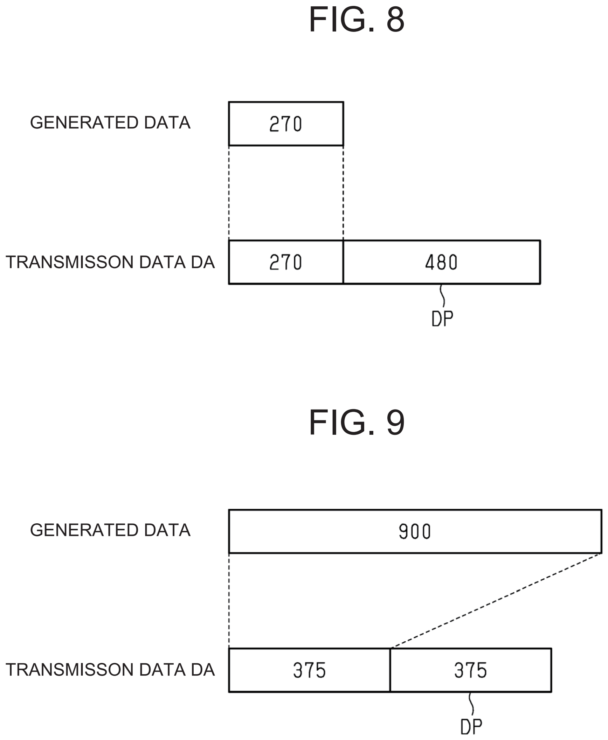

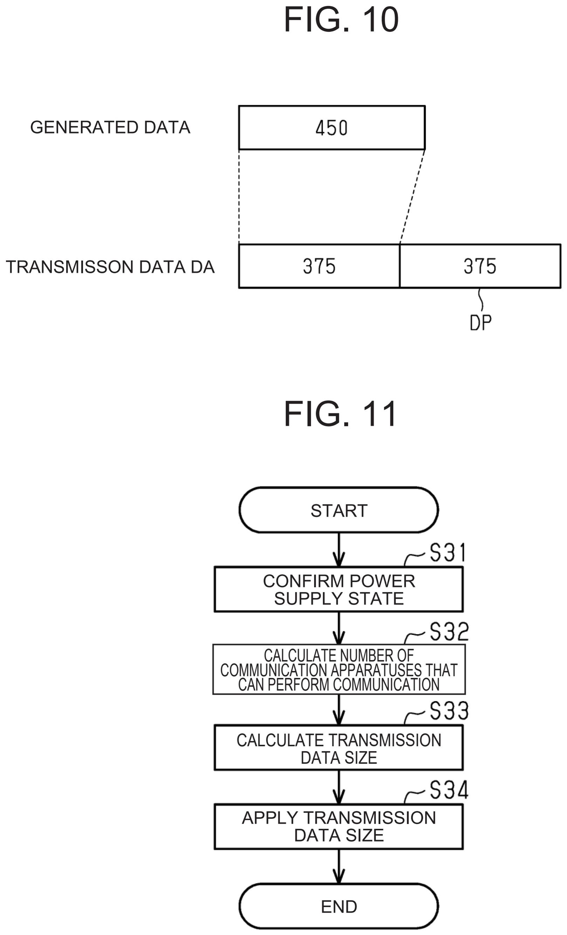

FIG. 8 to FIG. 10 indicate specific examples of an aspect where the communication apparatus generates the transmission data DA. An aspect where the communication apparatus generates the transmission data DA in accordance with the series of processing indicated in FIG. 7 and then transmits the generated transmission data DA will be described below with reference to FIG. 8 to FIG. 10. Hereinafter, a case of FIG. 8 will be referred to as a first case. Hereinafter, a case of FIG. 9 will be referred to as a second case. Hereinafter, a case of FIG. 10 will be referred to as a third case.

The first to the third cases indicate an aspect where the communication apparatus generates the transmission data DA when the vehicle 40 is in the accessory power supply state.
As indicated in FIG. 3, the transmission data size in the accessory power supply state is 750 bytes. In the first to the third cases, the communication apparatus that can perform communication in the in-vehicle network system 10 executes the series of processing indicated in FIG. 6 when the state of the vehicle 40 is switched to the accessory power supply state. Then, in the processing in step S13, the communication apparatus applies 750 bytes as a size of the data to be transmitted by the own apparatus.

FIG. 8 to FIG. 10 indicate the generated data and the transmission data DA. The communication apparatus generates the transmission data DA from the generated data. The generated data is data that is generated by the communication apparatus at a time point of execution of the processing in step S21 indicated in FIG. 7 and is to be transmitted when a turn of the own apparatus to transmit data has come. In the first to the third cases, the communication apparatus generates the generated data indicated in the respective drawings at a time point of execution of the processing in step S21.

In the first to the third cases, each of the communication apparatuses in the in-vehicle network system 10 generates the transmission data DA of the size of 750 bytes based on the generated data.

### First Case

As indicated in FIG. 8, in the first case, the size of the generated data is 270 bytes. In other words, in the first case, the size of the generated data is smaller than the transmission data size applied by the communication apparatus in the processing in step S13.

In the first case, the communication apparatus first executes the processing in step S21. In the first case, the communication apparatus generates the generated data indicated in FIG. 8 at a time point of execution of the processing in step S21. Thus, the communication apparatus determines that there is data to be transmitted by the own apparatus in the processing in step S21 (step S21: Yes).

Then, the communication apparatus executes the processing in step S22. In the first case, the size of the generated data is smaller than the upper limit data size. Thus, the communication apparatus determines that the size of the data to be transmitted is equal to or smaller than the upper limit data size in the first case (step S22: No).

Then, the communication apparatus executes the processing in step S24. In the processing in step S24, the communication apparatus provides the padding data DP to the generated data. In this event, the communication apparatus provides the padding data DP such that the size of the transmission data DA becomes 750 bytes that is the applied size of the data. Specifically, as indicated in FIG. 8, the communication apparatus provides the padding data DP of 480 bytes to the generated data. By this means, the transmission data DA of the size applied in the processing in step S13 in FIG. 6 is generated.

In the first case, the communication apparatus generates the transmission data DA through the processing in step S24 and then transmits the transmission data DA through the processing in step S26.
In this manner, when the size of the data to be transmitted is smaller than the applied size of the data, the communication apparatus transmits the data after providing the padding data DP to the data until the size of the data becomes the applied size of the data.

### Second Case

As indicated in FIG. 9, in the second case, the size of the generated data is 900 bytes. In other words, in the second case, the size of the generated data is larger than the transmission data size applied by the communication apparatus in the processing in step S13. Further, in the second case, the size of the generated data is larger than the upper limit data size.

In the second case, the communication apparatus first executes the processing in step S21. In the second case, the communication apparatus generates the generated data indicated in FIG. 9 at a time point of execution of the processing in step S21. Thus, the communication apparatus determines that there is data to be transmitted by the own apparatus in the second case (step S21: Yes).

Then, the communication apparatus executes the processing in step S22. In the second case, the size of the generated data is larger than the upper limit data size. Thus, the communication apparatus determines that the size of the transmission data is larger than the upper limit data size (step S22: Yes).

Then, the communication apparatus executes the processing in step S23. In the processing in step S23, the communication apparatus executes cutout of data. In this event, as indicated in FIG. 9, the communication apparatus cuts out data corresponding to 375 bytes that is the upper limit data size, from the generated data.

In this manner, when the size of the data to be transmitted is larger than the upper limit data size, the communication apparatus in the in-vehicle network system 10 reduces the size of the data to be transmitted to the upper limit data size.

Then, the communication apparatus executes the processing in step S24. In the processing in step S24, the communication apparatus provides the padding data DP to the cutout data. In this event, the communication apparatus provides the padding data DP such that the size of the transmission data DA becomes 750 bytes that is the applied size of the data. Specifically, as indicated in FIG. 9, the communication apparatus provides the padding data DP of 375 bytes to the cutout data. By this means, the transmission data DA of the size applied in the processing in step S13 in FIG. 6 is generated.

In this manner, when the upper limit data size is smaller than the applied size of the data, the communication apparatus provides data as padding to the data for which the size is reduced such that the size of the data reduced to the upper limit data size becomes the applied size of the data.

Note that as indicated in FIG. 3, when the vehicle 40 is in the ignition power supply state, the upper limit data size is equal to the transmission data size. Thus, when the vehicle 40 is in the ignition power supply state, the communication apparatus does not provide the padding data DP to the data for which the size is reduced to the upper limit data size.

In the second case, the communication apparatus generates the transmission data DA through the processing in step S24 and then transmits the transmission data DA in the processing in step S26.
In this manner, when the size of the data to be transmitted is larger than the applied size of the data, the communication apparatus transmits the data after reducing the size of the data until the size of the data becomes the applied size.

### Third Case

As indicated in FIG. 10, in the third case, the size of the generated data is 450 bytes. In other words, in the third case, the size of the generated data is smaller than the transmission data size applied by the communication apparatus in the processing in step S13. Further, in the third case, the size of the generated data is larger than the upper limit data size.

In the third case, the communication apparatus first executes the processing in step S21. In the third case, the communication apparatus generates the generated data indicated in FIG. 10 at a time point of execution of the processing in step S21. Thus, the communication apparatus determines that there is data to be transmitted by the own apparatus in the third case (step S21: Yes).

Next, the communication apparatus executes the processing in step S22. In the third case, the size of the generated data is larger than the upper limit data size. Thus, the communication apparatus determines that the size of the data to be transmitted is larger than the upper limit data size in the third case (step S22: Yes).

Next, the communication apparatus executes the processing in step S23. In the processing in step S23, the communication apparatus executes cutout of data. In this event, as indicated in FIG. 10, the communication apparatus cuts out data corresponding to 375 bytes that is the upper limit data size from the generated data.

Next, the communication apparatus executes the processing in step S24. In the processing in step S24, the communication apparatus provides the padding data DP to the cutout data. In this event, the communication apparatus provides the padding data DP such that the size of the transmission data DA becomes 750 bytes that is the applied size of the data. Specifically, as indicated in FIG. 10, the communication apparatus provides the padding data DP of 375 bytes to the cutout data. By this means, the transmission data DA of the size applied in the processing in step S13 in FIG. 6 is generated.

In the third case, the communication apparatus generates the transmission data DA through the processing in step S24 and then transmits the transmission data DA in the processing in step S26.

### Operation of Present Embodiment

A plurality of communication apparatuses that constitutes the in-vehicle network system 10 adjusts a size of data to be transmitted such that a total amount of data to be transmitted from the communication apparatuses in the in-vehicle network system 10 becomes fixed regardless of the state of the vehicle 40.

### Effects of Present Embodiment

(1) The communication apparatus can make a period with which the beacon signal BS is transmitted in the in-vehicle network system 10 fixed regardless of switching of the state of the vehicle 40.
(2) During a period from when the beacon signal BS is transmitted until when the next beacon signal BS is transmitted, a size of data to be transmitted by each of the communication apparatuses that can perform communication is determined for each state of the vehicle 40 such that a total amount of data to be transmitted by all the communication apparatuses that can perform communication becomes fixed regardless of the state of the vehicle 40. The storage apparatus of the communication apparatus stores information indicating a size of data to be transmitted by each of the communication apparatuses that can perform communication, the size of the data being determined in advance for each state of the vehicle 40. When the state of the vehicle 40 is switched, the processing circuit of the communication apparatus executes determining a size of data corresponding to the switched state of the vehicle 40 based on the information stored in the storage apparatus and applying the determined size as a size of data to be transmitted by the own apparatus.
   This enables the communication apparatus to apply an appropriate data size for each state of the vehicle 40 with reference to the information stored in the storage apparatus.
(3) The processing circuit of the communication apparatus executes transmitting dummy data of the size applied when the state of the vehicle 40 is switched when there is no data to be transmitted when a turn of the own apparatus has come after the beacon signal BS is sensed.

When a turn to transmit data has come, there is a case where there is no data to be transmitted by the communication apparatus. In this case, if the communication apparatus does not transmit data, a period with which the beacon signal BS is transmitted becomes shorter correspondingly. When there is no data to be transmitted when a turn of the own apparatus has come, the communication apparatus transmits dummy data. This enables the communication apparatus to prevent a period with which the beacon signal BS is transmitted from becoming shorter even when there is no data to be transmitted.

(4) Among sizes of data determined such that a total amount of data to be transmitted by all the communication apparatuses that can perform communication becomes fixed regardless of the state of the vehicle 40, the smallest size is determined as the upper limit data size. When the size of the data to be transmitted is larger than the upper limit data size, the processing circuit of the communication apparatus executes reducing the size of the data to the upper limit data size. When the upper limit data size is smaller than the applied size of the data, the processing circuit of the communication apparatus executes transmitting the data after providing data as padding to the data for which the size is reduced until the size of the data for which the size is reduced to the upper limit data size becomes the applied size of the data.

If a size of data to be transmitted as valid data in one communication is different for each state of the vehicle 40, processing of the communication apparatus that receives the data becomes complicated. The communication apparatus limits a size of data that can be transmitted as valid data in one communication using a minimum value among the sizes of data determined for each state of the vehicle 40 as an upper limit. By this means, the communication apparatus prevents processing of the communication apparatus that receives data from becoming complicated.

(5) In the in-vehicle network system 10, a value corresponding to a quotient obtained by dividing an amount of data to be transmitted in one cycle by a maximum value of the number of communication apparatuses that can perform communication is set as the upper limit data size. When a size of data to be transmitted is larger than the upper limit data size, the processing circuit of each of the communication apparatuses executes reducing the size of the data to the upper limit data size. When the upper limit data size is smaller than the applied size of the data, the processing circuit of each of the communication apparatuses executes transmitting data after providing data as padding to the data for which the size is reduced until the size of the data for which the size is reduced to the upper limit data size becomes the applied size of the data.

If a size of data to be transmitted as valid data in communication of one cycle is different for each state of the vehicle 40, processing of the communication apparatus that receives the data becomes complicated. The communication apparatus limits a size of data that can be transmitted as valid data in communication of one cycle using the minimum value among the sizes of data determined for each state of the vehicle 40 as an upper limit. By this means, the communication apparatus prevents the processing of the communication apparatus that receives data from becoming complicated.

(6) The state of the vehicle 40 is the power supply state in the vehicle 40 classified according to the number and types of devices to which power is supplied in the vehicle 40.
Each of the communication apparatuses performs adjustment such that a total amount of data to be transmitted from the communication apparatuses in the in-vehicle network system 10 becomes fixed regardless of the power supply state. This enables the communication apparatus to make the period with which the beacon signal BS is transmitted fixed regardless of switching of the power supply state.

(7) The in-vehicle network system 10 and the vehicle 40 adjust a size of data to be transmitted such that a total amount of data to be transmitted from a plurality of communication apparatuses becomes fixed regardless of the state of the vehicle 40. This enables the in-vehicle network system 10 and the vehicle 40 to make the period with which the beacon signal BS is transmitted in the in-vehicle network system 10 fixed regardless of switching of the state of the vehicle 40.

(8) The above-described communication method includes a step of, when the state of the vehicle 40 is switched, applying, by each of the communication apparatuses, a size of data set such that a total amount of data to be transmitted by all the communication apparatuses that can perform communication becomes fixed regardless of the state of the vehicle 40, as a size of data to be transmitted by the own apparatus during a period from when the beacon signal BS is transmitted until when the next beacon signal BS is transmitted (step S13). The communication method includes a step of, when the size of data to be transmitted is larger than the applied size, transmitting, by each of the communication apparatuses, the data after reducing the size of the data to the applied size (step S23, step S24 and step S26). The communication method includes a step of, when the size of data to be transmitted is smaller than the applied size, transmitting, by each of the communication apparatuses, the data after providing data as padding to the data until the size of the data becomes the applied size (step S24 and step S26).

The communication method includes adjusting the size of data to be transmitted by each of the communication apparatuses such that a total amount of data to be transmitted from the communication apparatuses in the in-vehicle network system 10 becomes fixed regardless of the state of the vehicle 40. This enables the communication method to make the period with which the beacon signal BS is transmitted in the in-vehicle network system 10 fixed regardless of switching of the state of the vehicle 40.

(9) The communication program PC is a program to be executed by the processing circuit of each of the communication apparatuses. The communication program PC causes the processing circuit of each of the communication apparatuses to execute, when the state of the vehicle 40 is switched, applying a size of data set such that a total amount of data to be transmitted by all the communication apparatuses that can perform communication becomes fixed regardless of the state of the vehicle 40 as a size of data to be transmitted by the own apparatus during a period from when the beacon signal BS is transmitted until when the next beacon signal BS is transmitted. The communication program PC causes the processing circuit of each of the communication apparatuses to execute, when the size of the data to be transmitted is larger than the applied size, transmitting the size after reducing the size of the data to the applied size. The communication program PC causes the processing circuit of each of the communication apparatuses to execute, when the size of the data to be transmitted is smaller than the applied size, transmitting the data after providing data as padding to the data until the size of the data becomes the applied size.

In this manner, the communication program PC causes the processing circuit of each of the communication apparatuses to adjust the size of the data to be transmitted such that a total amount of data transmitted from the communication apparatuses in the in-vehicle network system 10 becomes fixed regardless of the state of the vehicle 40. This enables the communication program PC to make the period with which the beacon signal BS is transmitted in the in-vehicle network system 10 fixed regardless of switching of the state of the vehicle 40.

In the above-described embodiment, the communication program PC is stored in the storage apparatuses 22 of the first apparatus 11 to the seventh apparatus 17 and the storage apparatus 32 of the management apparatus 18. The communication program PC may be provided in a state of being recorded in a recording medium. Examples of the recording medium in which the communication program PC is recorded can include a USB memory, an SSD, a memory such as an SD card, a CD-ROM, an optical disk, and the like.

### Modifications

The present embodiment can be implemented with modifications made thereto as follows. The present embodiment and the following modifications can be implemented in combination within such a range that no technical inconsistency arises.
- A configuration of the in-vehicle network system 10 included in the vehicle 40 is not limited to the aspect in FIG. 1.
   In FIG. 1, the in-vehicle network system 10 includes eight communication apparatuses including the management apparatus 18. The in-vehicle network system 10 may include seven or less, or nine or more communication apparatuses.

In FIG. 1, the communication apparatuses are connected through the communication line 19. For example, the communication apparatuses may be connected to each other in a wireless manner.
In the above-described embodiment, the communication apparatus executes the series of processing indicated in FIG. 7 when the beacon signal BS is sensed. A trigger of the communication apparatus executing the processing in FIG. 7 is not limited to that in the above-described embodiment. The communication apparatus may execute the series of processing indicated in FIG. 7 by, for example, being triggered by generation of the generated data.

As described with reference to FIG. 7, when there is no data to be transmitted, the communication apparatus generates dummy data. The communication apparatus does not have to generate dummy data when there is no data to be transmitted. In this case, when there is no data to be transmitted at a time point of execution of the processing in step S21, the communication apparatus does not transmit the transmission data DA even if a turn of the own apparatus to transmit data has come.

In the above-described embodiment, when the generated data is larger than the upper limit data size, the communication apparatus reduces the size of the generated data to the upper limit data size. The communication apparatus does not have to limit the size to the upper limit data size. In this case, when the size of the generated data is larger than the applied size of the data, the communication apparatus cuts out data corresponding to the applied size from the generated data and then transmits the cutout data as the transmission data DA. In this case, when the size of the generated data is smaller than the applied size of the data, the communication apparatus generates the transmission data DA by providing the padding data DP to the generated data until the size becomes the applied size and then transmits the generated transmission data DA.

In the above-described embodiment, among transmission data sizes determined for each state of the vehicle 40, a minimum size is determined as the upper limit data size. An aspect of the upper limit data size is not limited to the above-described embodiment. For example, the upper limit data size may be smaller than the minimum size among the transmission data sizes determined for each state of the vehicle 40.

In the above-described embodiment, a value corresponding to a quotient obtained by dividing an amount of data to be transmitted in one cycle by a maximum value of the number of communication apparatuses that can perform communication is set as the upper limit data size. An aspect of the upper limit data size is not limited to the above-described embodiment. For example, the upper limit data size may be smaller than the value corresponding to the quotient obtained by dividing the amount of data to be transmitted in one cycle in the in-vehicle network system 10 by the maximum value of the number of communication apparatuses that can perform communication.

In the above-described embodiment, the state of the vehicle 40 is the power supply state of the vehicle 40. The state of the vehicle 40 does not have to be the power supply state of the vehicle 40. For example, the state of the vehicle 40 may be a mode that is being executed by the vehicle 40. The mode that is being executed by the vehicle 40 is, for example, an automated driving mode, or the like.

In the above-described embodiment, the management apparatus 18 has a function as the communication apparatus. The management apparatus 18 does not have to have a function as the communication apparatus. In other words, the management apparatus 18 does not have to transmit data at a right timing for transmitting data using the beacon signal BS as a rough indication.

In the above-described embodiment, the communication apparatus stores information indicating the transmission data size for each state of the vehicle 40 determined in advance. As indicated in FIG. 6, the communication apparatus determines the transmission data size corresponding to the state of the vehicle 40 based on the stored information (step S12), and then applies the determined transmission data size as a size of data to be transmitted by the own apparatus (step S13). An aspect where the communication apparatus applies the size of the data to be transmitted by the own apparatus is not limited to the above-described embodiment.

FIG. 11 indicates a flow of a series of processing to be executed by each of the communication apparatuses in the in-vehicle network system 10 in the first modification. The series of processing indicated in FIG. 11 is executed, when the state of the vehicle 40 is switched, by the communication apparatus that can perform communication in the switched state of the vehicle 40.

The series of processing indicated in FIG. 11 is executed by the processing circuit of the communication apparatus executing the communication program PC stored in the storage apparatus. When one of the first apparatus 11 to the seventh apparatus 17 executes the series of processing indicated in FIG. 11, the series of processing indicated in FIG. 11 is executed by the processing circuit 21 executing the communication program PC stored in the storage apparatus 22. When the management apparatus 18 executes the series of processing indicated in FIG. 11, the series of processing indicated in FIG. 11 is executed by the processing circuit 31 executing the communication program PC stored in the storage apparatus 32.

The communication apparatus that becomes able to perform communication when the state of the vehicle 40 is switched executes the series of processing indicated in FIG. 11 instead of the series of processing indicated in FIG. 6 when the communication apparatus enters a state of being able to perform communication with other communication apparatuses in the in-vehicle network system 10.

The communication apparatus in a state of being able to perform communication that is continued when the state of the vehicle 40 is switched executes the series of processing indicated in FIG. 11 instead of the series of processing indicated in FIG. 6 when switching of the state of the vehicle 40 is sensed.

The communication apparatus that has started the series of processing indicated in FIG. 11 first executes the processing in step S31. In the processing in step S31, the communication apparatus confirms the switched power supply state of the vehicle 40 among the power supply states. This processing is similar to the processing in step S11 to be executed by the communication apparatus in FIG. 6. Then, the processing of the communication apparatus proceeds to step S32.

In the processing in step S32, the communication apparatus calculates the number of communication apparatuses that can perform communication in the switched state of the vehicle 40.
The communication apparatus in the first modification stores information indicating the number of communication apparatuses that can perform communication for each state of the vehicle 40. In other words, the communication apparatuses from the first apparatus 11 to the seventh apparatus 17 store information indicating the number of communication apparatuses that can perform communication for each state of the vehicle 40 in the storage apparatus 22. Further, the management apparatus 18 stores information indicating the number of communication apparatuses that can perform communication for each state of the vehicle 40 in the storage apparatus 32.

In the processing in step S32, the communication apparatus refers to the information indicating the number of communication apparatuses that can perform communication for each state of the vehicle 40, the information being stored in the storage apparatus. Then, the communication apparatus calculates the number of communication apparatuses that can perform communication in the switched state of the vehicle 40 based on the information. Then, the processing of the communication apparatus proceeds to step S33.

In the processing in step S33, the communication apparatus calculates a transmission data size corresponding to the switched state of the vehicle 40. In this event, the communication apparatus calculates the transmission data size based on an amount of data except an amount of the beacon signal BS to be transmitted in one cycle in the in-vehicle network system 10, and the number of communication apparatuses that can perform communication calculated in the processing in step S32. Specifically, the communication apparatus calculates a quotient by dividing the amount of data to be transmitted in one cycle by the number calculated in the processing in step S32, as the transmission data size.

In the in-vehicle network system 10, an amount of data except an amount of the beacon signal BS to be transmitted in one cycle is 3000 bytes. For example, when the switched state of the vehicle 40 is the battery power supply state, the communication apparatus calculates 1000 bytes that is a quotient obtained by dividing 3000 bytes by 3 that is the number of communication apparatuses that can perform communication in the battery power supply state, as the transmission data size. The processing of the communication apparatus that has calculated the transmission data size corresponding to the switched state of the vehicle 40 proceeds to step S34.

In the processing in step S34, the communication apparatus applies the transmission data size calculated in the processing in step S33 as a size of data to be transmitted by the own apparatus in the switched state of the vehicle 40. Then, the communication apparatus ends the series of processing indicated in FIG. 11.

In this manner, in the first modification, each of the communication apparatuses applies the transmission data size calculated by the own apparatus as the size of the data to be transmitted by the own apparatus. Thus, in the first modification, the transmission data size does not have to be determined in advance for each state of the vehicle 40.

In this case, the storage apparatus of the communication apparatus stores information indicating the number of communication apparatuses that can perform communication for each state of the vehicle 40. The processing circuit of the communication apparatus executes, when the state of the vehicle 40 is switched, calculating the number of communication apparatuses that can perform communication in the switched state of the vehicle 40 based on the information stored in the storage apparatus. The processing circuit of the communication apparatus executes calculating a quotient by dividing an amount of data to be transmitted in one cycle in the in-vehicle network system 10 by the calculated number as the size of the data to be transmitted by the own apparatus. The processing circuit of the communication apparatus executes applying the calculated data size as the size of the data to be transmitted by the own apparatus.

This enables the communication apparatus to apply an appropriate data size for each state of the vehicle 40 with reference to the information stored in the storage apparatus.
In the above-described embodiment, each of the communication apparatuses in the in-vehicle network system 10 determines the transmission data size based on the information stored in the own apparatus as indicated in FIG. 6 (step S12). Then, each of the communication apparatuses in the in-vehicle network system 10 applies the transmission data size determined by the own apparatus as the size of the data to be transmitted by the own apparatus (step S13). On the other hand, one of the communication apparatuses in the in-vehicle network system 10 may determine the transmission data size corresponding to the switched state of the vehicle 40, and other communication apparatuses in the in-vehicle network system 10 may apply the determined transmission data size.

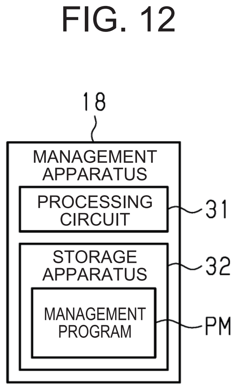

FIG. 12 illustrates a configuration of the management apparatus 18 included in the in-vehicle network system 10 of a second modification. The management apparatus 18 of the second modification includes the processing circuit 31 and the storage apparatus 32 in a similar manner to the management apparatus 18 in FIG. 1.

As illustrated in FIG. 12, the management apparatus 18 of the modification stores a management program PM. By the management program PM being executed by the processing circuit 31, processing regarding determination of the transmission data size is executed. The management apparatus 18 implements the communication method in the in-vehicle network system 10 by executing the processing regarding determination of the transmission data size. Further, by the management program PM being executed by the processing circuit 31, processing regarding transmission of the beacon signal BS is executed.

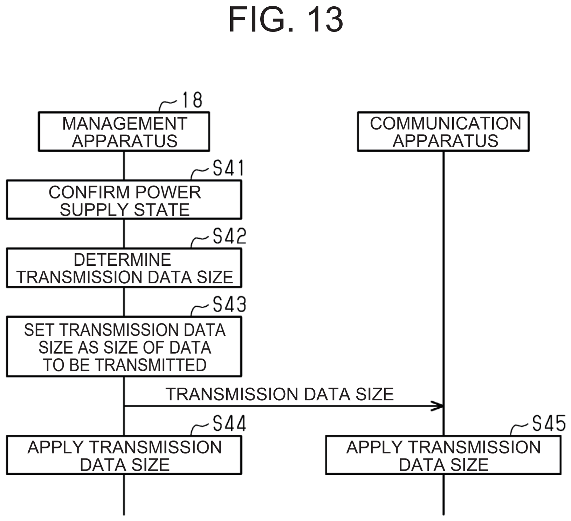

FIG. 13 indicates a flow of a series of processing to be executed by the management apparatus 18 and communication apparatuses other than the management apparatus 18 in the in-vehicle network system 10 of the second modification. The communication apparatuses other than the management apparatus 18 are the first apparatus 11 to the seventh apparatus 17.

Among the series of processing indicated in FIG. 13, processing to be executed by the management apparatus 18 is executed by the processing circuit 31 included in the management apparatus 18 executing the management program PM stored in the storage apparatus 32. Among the series of processing indicated in FIG. 13, processing to be executed by the first apparatus 11 to the seventh apparatus 17 is executed by the processing circuit 21 executing the communication program PC stored in the storage apparatus 22.

The communication apparatus in the in-vehicle network system 10 executes the series of processing indicated in FIG. 13 instead of the series of processing indicated in FIG. 6 when the state of the vehicle 40 is switched.
When the management apparatus 18 enters a state of being able to perform communication as a result of the state of the vehicle 40 being switched, or when switching of the state of the vehicle 40 is sensed, the processing in step S41 is executed. In the processing in step S41, the management apparatus 18 confirms the switched power supply state of the vehicle 40 among the power supply states. This processing is similar to the processing in step S11 to be executed by the communication apparatus in FIG. 6. Then, the processing of the management apparatus 18 proceeds to step S42.

In the processing in step S42, the management apparatus 18 determines the transmission data size corresponding to the switched state of the vehicle 40.
In the in-vehicle network system 10 of the second modification, the management apparatus 18 stores information indicating the transmission data size for each state of the vehicle 40 determined in advance in the storage apparatus 32. In the processing in step S42, the management apparatus 18 refers to the stored information indicating the transmission data size. Then, the management apparatus 18 determines the transmission data size corresponding to the switched state of the vehicle 40 based on the information indicating the transmission data size and the switched power supply state confirmed in step S41. Then, the processing of the management apparatus 18 proceeds to step S43.

In the processing in step S43, the management apparatus 18 sets the transmission data size determined in the processing in step S42 as a size of data to be transmitted by each of the communication apparatuses in the in-vehicle network system 10 in the switched state of the vehicle 40.

As indicated in FIG. 13, the management apparatus 18 transmits information indicating the transmission data size after executing the processing in step S43. The information indicating the transmission data size is information indicating the transmission data size set as the size of the data to be transmitted by each of the communication apparatuses in the processing in step S43. The management apparatus 18 transmits the information indicating the transmission data size to the communication apparatuses that can perform communication in the switched state of the vehicle 40 among the communication apparatuses included in the in-vehicle network system 10.

As indicated in FIG. 13, the management apparatus 18 executes processing in step S44 after transmitting the information indicating the transmission data size. In the processing in step S44, the management apparatus 18 applies the transmission data size set as the size of the data to be transmitted by each of the communication apparatuses in the processing in step S43, as the size of the data to be transmitted by the own apparatus.

As indicated in FIG. 13, the communication apparatus that has received the information indicating the transmission data size executes processing in step S45. In the processing in step S45, each of the communication apparatuses applies the transmission data size indicated by the received information, as the size of the data to be transmitted by the own apparatus. In this manner, in the second modification, each of the communication apparatuses other than the management apparatus 18 applies the transmission data size set by the management apparatus 18 as the size of the data to be transmitted by the own apparatus.

After the processing in step S44 and step S45 is executed, the series of processing indicated in FIG. 13 ends.
In this case, the management apparatus 18 sets the size of the data to be transmitted by each of the communication apparatuses such that a total amount of data to be transmitted from the communication apparatuses in the in-vehicle network system 10 becomes fixed regardless of the state of the vehicle 40. Then, the management apparatus 18 causes each of the communication apparatuses to apply the set data size by transmitting the information indicating the set data size to the communication apparatuses. This enables the management apparatus 18 to change the size of the data of each of the communication apparatuses such that the period with which the beacon signal BS is transmitted in the in-vehicle network system 10 becomes fixed regardless of switching of the state of the vehicle 40.

In this case, the size of the data to be transmitted by each of the communication apparatuses that can perform communication is determined in advance for each state of the vehicle 40 such that a total amount of data to be transmitted by all the communication apparatuses that can perform communication becomes fixed regardless of the state of the vehicle 40 during a period from when the beacon signal BS is transmitted until when the next beacon signal BS is transmitted. The storage apparatus 32 of the management apparatus 18 stores information indicating the size of the data to be transmitted by each of the communication apparatuses that can perform communication, the size of the data being determined in advance for each state of the vehicle 40. When the state of the vehicle 40 is switched, the processing circuit 31 of the management apparatus 18 determines a size of data corresponding to the switched state of the vehicle 40 based on the information stored in the storage apparatus 32. Then, the processing circuit 31 of the management apparatus 18 sets the determined size as the size of the data to be transmitted by each of the communication apparatuses.

The management apparatus 18 stores information indicating the size of the data determined in advance for each state of the vehicle 40. When the state of the vehicle 40 is switched, the management apparatus 18 sets the size of the data to be transmitted by each of the communication apparatuses based on the stored information and then transmits information indicating the set size of the data. This enables the management apparatus 18 to cause each of the communication apparatuses to apply an appropriate data size for each state of the vehicle 40.

In this case, in the in-vehicle network system 10 and the vehicle 40, when the state of the vehicle 40 is switched, the management apparatus 18 sets the size of the data to be transmitted by each of the communication apparatuses such that a total amount of data to be transmitted by a plurality of communication apparatuses in the in-vehicle network system 10 becomes fixed regardless of the state of the vehicle 40 during a period from when the beacon signal BS is transmitted until when the next beacon signal BS is transmitted. In the in-vehicle network system 10 and the vehicle 40, the management apparatus 18 transmits information indicating the set size of the data to the communication apparatuses. Each of the communication apparatuses applies the size of the data indicated by the information received from the management apparatus 18 as the size of the data to be transmitted by the own apparatus.

In the in-vehicle network system 10 and the vehicle 40, when the state of the vehicle 40 is switched, the management apparatus 18 sets the size of the data, and then, each of the communication apparatuses applies the set size of the data. This enables the in-vehicle network system 10 and the vehicle 40 to cause each of the communication apparatuses to switch the size of the data to be transmitted in accordance with switching of the state of the vehicle 40.

In this case, the above-described communication method includes a step of, when the state of the vehicle 40 is switched, setting, by the management apparatus 18, a size of data to be transmitted by each of the communication apparatuses such that a total amount of data to be transmitted by a plurality of the communication apparatuses in the in-vehicle network system 10 becomes fixed regardless of the state of the vehicle 40 during a period from when the beacon signal BS is transmitted until when the next beacon signal BS is transmitted (step S43). The communication method includes a step of transmitting, by the management apparatus 18, information indicating the set size of the data to the communication apparatuses. In the communication method, when each of the communication apparatuses applies a size of data to be transmitted by the own apparatus, the communication apparatus applies the size of the data indicated by the information received from the management apparatus 18 as the size of the data to be transmitted by the own apparatus (step S45).

In the communication method, when the state of the vehicle 40 is switched, after the management apparatus 18 sets the size of the data, each of the communication apparatuses applies the set size of the data. This enables the communication method to cause each of the communication apparatuses to switch the size of the data to be transmitted in accordance with switching of the state of the vehicle 40.

In this case, the management program PM is a program to be executed by the processing circuit 31 of the management apparatus 18 in the in-vehicle network system 10. The management program PM causes the processing circuit 31 of the management apparatus 18 to execute transmitting the beacon signal BS again when it is confirmed that all the communication apparatuses that can perform communication have had turns transmitting data after the beacon signal BS is transmitted. The management program PM causes the processing circuit 31 of the management apparatus 18 to execute, when the state of the vehicle 40 is switched, setting the size of the data to be transmitted by each of the communication apparatuses such that a total amount of the data to be transmitted by a plurality of the communication apparatuses in the in-vehicle network system 10 becomes fixed regardless of the state of the vehicle 40 during a period from when the beacon signal BS is transmitted until when the next beacon signal BS is transmitted. The management program PM causes the processing circuit 31 of the management apparatus 18 to execute transmitting information indicating the set size of the data to the communication apparatuses.

In this manner, the management program PM causes the processing circuit 31 of the management apparatus 18 to set the size of the data to be transmitted by each of the communication apparatuses such that the total amount of the data to be transmitted from the communication apparatuses in the in-vehicle network system 10 becomes fixed regardless of the state of the vehicle 40. Then, the management program PM causes the processing circuit 31 of the management apparatus 18 to cause each of the communication apparatuses to apply the set size of the data by transmitting the information indicating the set size of the data to the communication apparatuses. This enables the management program PM to change the size of the data of each of the communication apparatuses such that the period with which the beacon signal BS is transmitted in the in-vehicle network system 10 becomes fixed regardless of switching of the state of the vehicle 40.

In the second modification, the management program PM is stored in the storage apparatus 32 of the management apparatus 18. The management program PM may be provided in a state of being recorded in a recording medium. Examples of the recording medium in which the management program PM is recorded can include a USB memory, an SSD, a memory such as an SD card, a CD-ROM, an optical disk, and the like.

In the second modification, the management apparatus 18 stores information indicating the transmission data size, the transmission data size being determined in advance for each state of the vehicle 40. As indicated in FIG. 13, the management apparatus 18 determines the transmission data size corresponding to the state of the vehicle 40 based on the stored information (step S42) and then sets the determined transmission data size as the size of data to be transmitted by each of the communication apparatuses (step S43). An aspect where the management apparatus 18 sets the size of the data to be transmitted by each of the communication apparatuses is not limited to the above-described embodiment.

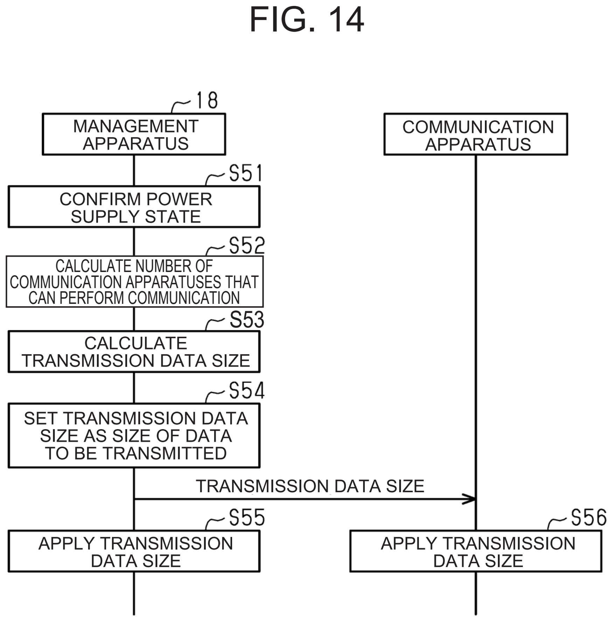

FIG. 14 indicates a flow of a series of processing to be executed by the management apparatus 18 and the communication apparatuses other than the management apparatus 18 in the in-vehicle network system 10 of the third modification.
Among the series of processing indicated in FIG. 14, processing to be executed by the management apparatus 18 is executed by the processing circuit 31 included in the management apparatus 18 executing the management program PM stored in the storage apparatus 32. Among the series of processing indicated in FIG. 14, processing to be executed by the first apparatus 11 to the seventh apparatus 17 is executed by the processing circuit 21 executing the communication program PC stored in the storage apparatus 22.

Each of the communication apparatuses in the in-vehicle network system 10 executes the series of processing indicated in FIG. 14 instead of the series of processing indicated in FIG. 6 when the state of the vehicle 40 is switched.
The management apparatus 18 executes the processing in step S51 when the management apparatus 18 enters a state of being able to perform communication as a result of the state of the vehicle 40 being switched or when switching of the state of the vehicle 40 is sensed. In the processing in step S51, the management apparatus 18 confirms the switched power supply state of the vehicle 40 among the power supply states. This processing is similar to the processing in step S11 to be executed by the communication apparatus in FIG. 6. Then, the processing of the management apparatus 18 proceeds to step S52.

In the processing in step S52, the management apparatus 18 calculates the number of communication apparatuses that can perform communication in the switched state of the vehicle 40.
The management apparatus 18 of the third modification stores information indicating the number of communication apparatuses that can perform communication for each state of the vehicle 40 in the storage apparatus 32. In the processing in step S52, the management apparatus 18 calculates the number of communication apparatuses that can perform communication in the switched state of the vehicle 40 based on the stored information. Then, the processing of the management apparatus 18 proceeds to step S53.

In the processing in step S53, the management apparatus 18 calculates a transmission data size corresponding to the switched state of the vehicle 40. In this event, the management apparatus 18 calculates the transmission data size based on an amount of data except an amount of the beacon signal BS to be transmitted in one cycle and the number of communication apparatuses that can perform communication calculated in the processing in step S52 in the in-vehicle network system 10. Specifically, the management apparatus 18 calculates a quotient by dividing the amount of data to be transmitted in one cycle in the in-vehicle network system 10 by the number calculated in the processing in step S52, as the transmission data size.

In the in-vehicle network system 10, the amount of data except the amount of the beacon signal BS to be transmitted in one cycle is 3000 bytes. For example, when the switched state of the vehicle 40 is the battery power supply state, the management apparatus 18 calculates 1000 bytes that is a quotient by dividing 3000 bytes by 3 that is the number of communication apparatuses that can perform communication in the battery power supply state, as the transmission data size. The processing of the management apparatus 18 that has calculated the transmission data size corresponding to the switched state of the vehicle 40 proceeds to step S54.

In the processing in step S54, the management apparatus 18 sets the transmission data size calculated in the processing in step S53 as a size of data to be transmitted by each of the communication apparatuses in the in-vehicle network system 10 in the switched state of the vehicle 40.

As indicated in FIG. 14, the management apparatus 18 transmits information indicating the transmission data size after executing the processing in step S54. The information indicating the transmission data size to be transmitted by the management apparatus 18 is information indicating the transmission data size set as the size of the data to be transmitted by each of the communication apparatuses in the processing in step S54. The management apparatus 18 transmits the information indicating the transmission data size to the communication apparatuses that can perform communication in the switched state of the vehicle 40 among the communication apparatuses included in the in-vehicle network system 10.

As indicated in FIG. 14, the management apparatus 18 executes processing in step S55 after transmitting the information indicating the transmission data size. In the processing in step S55, the management apparatus 18 applies the transmission data size set as the size of the data to be transmitted by each of the communication apparatuses in the processing in step S54 as a size of data to be transmitted by the own apparatus.

As indicated in FIG. 14, each of the communication apparatuses that have received the information indicating the transmission data size executes processing in step S56. In the processing in step S56, the communication apparatus applies the transmission data size indicated by the received information as the size of the data to be transmitted by the own apparatus. In this manner, in the third modification, each of the communication apparatuses other than the management apparatus 18 applies the transmission data size set by the management apparatus 18 as the size of the data to be transmitted by the own apparatus in a similar manner to the second modification.

After the processing in step S55 and the processing in step S56 are executed, the series of processing indicated in FIG. 14 ends.
In this case, the storage apparatus 32 of the management apparatus 18 stores information indicating the number of communication apparatuses that can perform communication for each state of the vehicle 40. When the state of the vehicle 40 is switched, the processing circuit 31 of the management apparatus 18 executes calculating the number of communication apparatuses that can perform communication in the switched state of the vehicle 40 based on the information stored in the storage apparatus 32. The processing circuit 31 of the management apparatus 18 executes calculating a quotient by dividing the amount of data to be transmitted in one cycle in the in-vehicle network system 10 by the calculated number, as a size of data to be transmitted by each of the communication apparatuses.

The management apparatus 18 determines the size of the data to be transmitted by each of the communication apparatuses based on the number of communication apparatuses that can perform communication and the amount of data to be transmitted in one cycle. This enables the management apparatus 18 to cause each of the communication apparatuses to apply an appropriate data size for each state of the vehicle 40.

In the second modification and the third modification, the management apparatus 18 sets the size of the data to be transmitted by each of the communication apparatuses and transmits the set size to other communication apparatuses. The communication apparatus other than the management apparatus 18 may set the size of the data to be transmitted by each of the communication apparatuses and transmit the set size to other communication apparatuses in the in-vehicle network system 10. For example, the first apparatus 11 may set the size of the data to be transmitted by each of the communication apparatuses and transmit the set size to other communication apparatuses.

In the above-described embodiment, the communication apparatuses that can perform communication in the state of the vehicle 40 apply an equal transmission data size. The transmission data sizes to be applied by the communication apparatuses that can perform communication in the state of the vehicle 40 do not have to be equal.

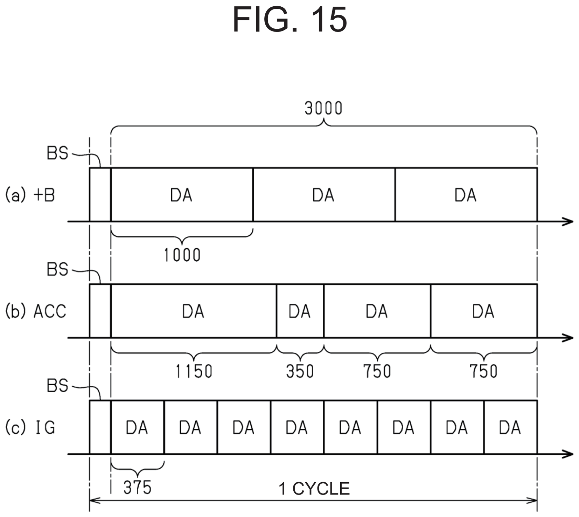

FIG. 15 indicates an aspect where the communication apparatuses transmit data in the in-vehicle network system 10 in a fourth modification for each power supply state of the vehicle 40. In FIG. 15, time passes from a left side to a right side in a similar manner to FIG. 5.

In FIG. 15, each rectangle to which a reference sign "DA" is assigned indicates the transmission data DA. In FIG. 15, an area of the rectangle is larger as a size of data is larger. In FIG. 15, the rectangles indicating the beacon signals BS have the same size.

In FIG. 15, in a similar manner to the virtual case, all the communication apparatuses that can perform communication in the in-vehicle network system 10 transmit the transmission data DA.
In part (a) of FIG. 15, the beacon signal BS and the transmission data DA to be transmitted in one cycle in the battery power supply state are indicated. As indicated in FIG. 3, the number of communication apparatuses that can perform communication in the battery power supply state is three. Thus, in part (a) of FIG. 15, three pieces of transmission data DA are indicated.

In part (b) of FIG. 15, the beacon signal BS and the transmission data DA to be transmitted in one cycle in the accessory power supply state are indicated. As indicated in FIG. 3, the number of communication apparatuses that can perform communication in the accessory power supply state is four. Thus, in part (b) of FIG. 15, four pieces of transmission data DA are indicated.

In part (c) of FIG. 15, the beacon signal BS and the transmission data DA to be transmitted in one cycle in the ignition power supply state are indicated. As indicated in FIG. 3, the number of communication apparatuses that can perform communication in the ignition power supply state is eight. Thus, in part (c) of FIG. 15, eight pieces of transmission data DA are indicated.

In part (a) of FIG. 15, the communication apparatuses transmit transmission data DA of an equal size. In part (a) of FIG. 15, the size of the transmission data DA is 1000 bytes per one piece.

In part (c) of FIG. 15, the communication apparatuses transmit the transmission data DA of an equal size. In part (c) of FIG. 15, the size of the transmission data DA is 375 bytes per one piece.
In (b) of FIG. 15, sizes of the transmission data DA to be transmitted in one cycle are 1150 bytes, 350 bytes, 750 bytes, and 750 bytes from left to right. In this manner, in the accessory power supply state, the sizes of the transmission data DA to be transmitted by the communication apparatuses are not equal. In other words, in the accessory battery power supply state, the transmission data sizes applied by the communication apparatuses are not equal.

Even in a case as indicated in FIG. 15, a total amount of the transmission data DA to be transmitted in one cycle in each power supply state is equally 3000 bytes. Thus, in the in-vehicle network system 10 of the fourth modification, the period with which the management apparatus 18 transmits the beacon signal BS is fixed regardless of the power supply state. In this manner, even when the transmission data sizes to be applied by the communication apparatuses are not equal, the period with which the beacon signal BS is transmitted can be made fixed regardless of the power supply state.

In this case, the transmission data size is set in advance for each state of the vehicle 40 for each of the communication apparatuses. Further, each of the communication apparatuses applies the transmission data size corresponding to the switched state of the vehicle 40 among the transmission data size for each state of the vehicle 40 set for the own apparatus as a size of data to be transmitted by the own apparatus.

In the fourth modification, a smallest size among the transmission data sizes determined for each state of the vehicle 40 for the respective communication apparatuses, is 350 bytes in part (b) of FIG. 15. In the fourth modification, the communication apparatuses, for example, generate the transmission data DA using 350 bytes as the upper limit data size.

### Supplements

Technical ideas that can be grasped from the above-described embodiment and modifications will be described.

### Supplement 1

A communication apparatus in an in-vehicle network system including a plurality of the communication apparatuses that enters a state of being able to perform communication with other communication apparatuses according to a state of a vehicle and has a physical layer collision avoidance function of transmitting data when there is data to be transmitted when a turn of the own apparatus has come after a beacon signal is sensed, and a management apparatus that, after transmitting the beacon signal, transmits the beacon signal again when it is confirmed that all the communication apparatuses that are able to perform communication have had turns transmitting data, the communication apparatus including a processing circuit and a storage apparatus, in which the processing circuit executes, when the state of the vehicle is switched, applying a size of data set such that a total amount of data to be transmitted by all the communication apparatuses that are able to perform communication becomes fixed regardless of the state of the vehicle during a period from when the beacon signal is transmitted until when the next beacon signal is transmitted, as a size of data to be transmitted by the own apparatus, when the size of the data to be transmitted is larger than the applied size, transmitting the data after reducing the size of the data to the applied size, and when the size of the data to be transmitted is smaller than the applied size, transmitting the data after providing data as padding to the data until the size of the data becomes the applied size.

### Supplement 2

The communication apparatus according to Supplement 1, in which the size of the data to be transmitted by each of the communication apparatuses that are able to perform communication is determined in advance for each state of the vehicle such that the total amount of the data to be transmitted by all the communication apparatuses that are able to perform communication becomes fixed regardless of the state of the vehicle during the period from when the beacon signal is transmitted until when the next beacon signal is transmitted, the storage apparatus stores information indicating the size of the data to be transmitted by each of the communication apparatuses that are able to perform communication, the size of the data being determined in advance for each state of the vehicle, and the processing circuit executes, when the state of the vehicle is switched, determining a size of data corresponding to the switched state of the vehicle based on the information stored in the storage apparatus and applying the determined size as the size of the data to be transmitted by the own apparatus.

### Supplement 3

The communication apparatus according to Supplement 1, in which the storage apparatus stores information indicating the number of the communication apparatuses that are able to perform communication for each state of the vehicle, and the processing circuit executes, when the state of the vehicle is switched, calculating the number of the communication apparatuses that are able to perform communication in the switched state of the vehicle based on the information stored in the storage apparatus, calculating a quotient by dividing an amount of data to be transmitted in one cycle in the in-vehicle network system by the calculated number, as the size of the data to be transmitted by the own apparatus, and applying the calculated size of the data as the size of the data to be transmitted by the own apparatus.

### Supplement 4

The communication apparatus according to any one of Supplement 1 to Supplement 3, in which the processing circuit executes, when there is no data to be transmitted when a turn of the own apparatus has come after the beacon signal is sensed, transmitting dummy data of the applied size when the state of the vehicle is switched.

### Supplement 5

The communication apparatus according to any one of Supplement 1 to Supplement 4, in which the smallest size among sizes of data determined for the communication apparatuses such that the total amount of the data to be transmitted by all the communication apparatuses that are able to perform communication becomes fixed regardless of the state of the vehicle is determined as an upper limit data size, and the processing circuit executes, when the size of the data to be transmitted is larger than the upper limit data size, reducing the size of the data to the upper limit data size, and when the upper limit data size is smaller than the applied size of the data, transmitting the data after providing data as padding to the data for which the size is reduced until the size of the data reduced to the upper limit data size becomes the applied size of the data.

### Supplement 6

The communication apparatus according to Supplement 3, in which a value corresponding to a quotient obtained by dividing an amount of data to be transmitted in one cycle in the in-vehicle network system by a maximum value of the number of the communication apparatuses that are able to perform communication is set as an upper limit data size, and the processing circuit executes, when the size of the data to be transmitted is larger than the upper limit data size, reducing the size of the data to the upper limit data size, and when the upper limit data size is smaller than the applied size of the data, transmitting the data after providing data as padding to the data for which the size is reduced until the size of the data reduced to the upper limit data size becomes the applied size of the data.

### Supplement 7

The communication apparatus according to any one of Supplement 1 to Supplement 6, in which the state of the vehicle is a power supply state in the vehicle classified according to the number and types of devices to which power is supplied in the vehicle.

## Claims

1. A communication apparatus in an in-vehicle network system including a plurality of the communication apparatuses and a management apparatus, the communication apparatus that enters a state of being able to perform communication with another communication apparatus according to a state of a vehicle (40) and has a physical layer collision avoidance function of transmitting data when there is data to be transmitted when a turn of an own apparatus has come after a beacon signal is sensed, the management apparatus that is configured to, after transmitting the beacon signal, transmit the beacon signal again when the management apparatus confirms that all the communication apparatuses that are able to perform communication have had turns transmitting data, the communication apparatus comprising:
a processing circuit (21); and
a storage apparatus (22),
wherein the processing circuit is configured to execute:
when the state of the vehicle (40) is switched, applying a size of data set such that a first total amount of data becomes fixed regardless of the state of the vehicle (40) in a predetermined period, as a size of data to be transmitted by the own apparatus, the first total amount of the data being an amount of data to be transmitted by all the communication apparatuses that are able to perform communication, the predetermined period being a period from when the beacon signal is transmitted until when the next beacon signal is transmitted;
when the size of the data to be transmitted is larger than the applied size, transmitting the data after reducing the size of the data to the applied size; and
when the size of the data to be transmitted is smaller than the applied size, transmitting the data after providing data as padding to the data until the size of the data becomes the applied size.

2. The communication apparatus according to claim 1, wherein:
the size of the data to be transmitted by each of the communication apparatuses that are able to perform communication is determined in advance for a corresponding one of states of the vehicle (40) such that the first total amount of the data becomes fixed regardless of the states of the vehicle (40) in the predetermined period;
the storage apparatus (22) stores information indicating the size of the data to be transmitted by each of the communication apparatuses that are able to perform communication, the size of the data being determined in advance for each of the states of the vehicle (40); and
the processing circuit (21) is configured to execute, when a state of the vehicle (40) is switched, determining a size of data corresponding to the switched state of the vehicle (40) based on the information stored in the storage apparatus (22) and applying the determined size as the size of the data to be transmitted by the own apparatus.

3. The communication apparatus according to claim 1, wherein:
the storage apparatus (22) stores information indicating a number of the communication apparatuses that are able to perform communication for each state of the vehicle (40); and
the processing circuit (21) is configured to execute:
when the state of the vehicle (40) is switched, calculating the number of the communication apparatuses that are able to perform communication in the switched state of the vehicle (40) based on the information stored in the storage apparatus (22);
calculating a quotient by dividing an amount of data to be transmitted in one cycle in the in-vehicle network system by the calculated number as the size of the data to be transmitted by the own apparatus; and
applying the calculated size of the data as the size of the data to be transmitted by the own apparatus.

4. The communication apparatus according to any one of claims 1 to 3, wherein the processing circuit (21) is configured to execute, when there is no data to be transmitted when a turn of the own apparatus has come after the beacon signal is sensed, transmitting dummy data of the applied size.

5. The communication apparatus according to any one of claims 1 to 3, wherein:
a smallest size among sizes of data determined such that the first total amount of the data becomes fixed regardless of the state of the vehicle is determined as an upper limit data size; and
the processing circuit (21) is configured to execute:
when the size of the data to be transmitted is larger than the upper limit data size, reducing the size of the data to the upper limit data size; and
when the upper limit data size is smaller than the applied size of the data, providing data as padding to the data for which the size is reduced until the size of the data reduced to the upper limit data size becomes the applied size of the data.

6. The communication apparatus according to claim 3, wherein:
a value corresponding to a quotient obtained by dividing an amount of data to be transmitted in one cycle in the in-vehicle network system by a maximum value of the number of the communication apparatuses that are able to perform communication is set as an upper limit data size; and
the processing circuit (21) is configured to execute:
when the size of the data to be transmitted is larger than the upper limit data size, reducing the size of the data to the upper limit data size; and
when the upper limit data size is smaller than the applied size of the data, providing data as padding to the data for which the size is reduced until the size of the data reduced to the upper limit data size becomes the applied size of the data.

7. The communication apparatus according to any one of claims 1 to 3, wherein the state of the vehicle (40) is a power supply state in the vehicle (40) classified in accordance with the number and types of devices to which power is supplied in the vehicle (40).

8. A management apparatus constituting an in-vehicle network system with the communication apparatus according to claim 1, the management apparatus comprising:
a processing circuit (21); and
a storage apparatus (22),
wherein the processing circuit (21) is configured to execute:
after transmitting a beacon signal, transmitting the beacon signal again when the management apparatus confirms that all the communication apparatuses that are able to perform communication have had turns transmitting data;
when a state of a vehicle (40) is switched, setting a size of data to be transmitted by the communication apparatus such that a second total amount of data to be transmitted by a plurality of the communication apparatuses in the in-vehicle network system becomes fixed regardless of the state of the vehicle (40) in the predetermined period; and
transmitting information indicating the set size of the data to the communication apparatus.

9. The management apparatus according to claim 8, wherein:
the size of the data to be transmitted by each of the communication apparatuses that are able to perform communication is determined in advance for a corresponding one of the states of the vehicle such that a first total amount of data becomes fixed regardless of the state of the vehicle in the predetermined period;
the storage apparatus (22) is configured to store information indicating the size of the data to be transmitted by each of the communication apparatuses that are able to perform communication, the size of the data being determined in advance for each of the states of the vehicle (40); and
the processing circuit (21) is configured to execute:
when the state of the vehicle (40) is switched, determining a size of data corresponding to the switched state of the vehicle (40) based on the information stored in the storage apparatus (22); and
setting the determined size as the size of the data to be transmitted by the communication apparatus.

10. The management apparatus according to claim 8, wherein:
the storage apparatus (22) stores information indicating a number of the communication apparatuses that are able to perform communication for each state of the vehicle (40); and
the processing circuit (21) is configured to execute:
when the state of the vehicle (40) is switched, calculating the number of the communication apparatuses that are able to perform communication in the switched state of the vehicle (40) based on the information stored in the storage apparatus (22);
calculating a quotient by dividing an amount of data to be transmitted in one cycle in the in-vehicle network system by the calculated number as the size of the data to be transmitted by each of the communication apparatuses; and
setting the calculated size of the data as the size of the data to be transmitted by each of the communication apparatuses.

11. An in-vehicle network system comprising:
a plurality of communication apparatuses, a communication apparatus included communication apparatuses entering a state of being able to perform communication with another communication apparatus according to a state of a vehicle (40) and having a physical layer collision avoidance function of transmitting data when there is data to be transmitted when a turn of an own apparatus has come after a beacon signal is sensed; and
a management apparatus that transmits the beacon signal again when the management apparatus confirms that all the communication apparatuses that are able to perform communication have had turns transmitting data after transmitting the beacon signal,
wherein each of the communication apparatuses is configured to execute:
when the state of the vehicle (40) is switched, applying a size of data set such that a total amount of data becomes fixed regardless of the state of the vehicle (40) in a predetermined period, as a size of data to be transmitted by the own apparatus, the predetermined period being a period from when the beacon signal is transmitted until when the next beacon signal is transmitted, and the total amount of the data being a total amount of data to be transmitted by all the communication apparatuses that are able to perform communication;
when the size of the data to be transmitted is larger than the applied size, transmitting the data after reducing the size of the data to the applied size; and
when the size of the data to be transmitted is smaller than the applied size, transmitting the size after providing data as padding to the data until the size of the data becomes the applied size.

12. The in-vehicle network system according to claim 11, wherein:
the management apparatus is configured to execute:
when the state of the vehicle (40) is switched, setting the size of the data to be transmitted by the communication apparatus such that a second total amount of data becomes fixed regardless of the state of the vehicle (40) in the predetermined period; and
transmitting information indicating the set size of the data to the communication apparatus,
the second total amount of the data is a total amount of data to be transmitted by the plurality of the communication apparatuses in the in-vehicle network system; and
the communication apparatuses is configured to apply the size of the data indicated by the information received from the management apparatus as the size of the data to be transmitted by the own apparatus.

13. A vehicle comprising the in-vehicle network system according to claim 11 or 12.

14. A non-transitory storage medium of each of communication apparatuses in an in-vehicle network system including a plurality of the communication apparatuses and a management apparatus, the non-transitory storage medium storing instructions that are executable by one or more processors included in a processing circuit of each of the communication apparatuses and that cause the one or more processors to perform a first function, the communication apparatuses being put into a state of being able to perform communication with another communication apparatus according to a state of a vehicle (40) and having a physical layer collision avoidance function of transmitting data when there is data to be transmitted when a turn of an own apparatus has come after a beacon signal is sensed, the management apparatus being configured to, after transmitting the beacon signal, transmit the beacon signal again when the management apparatus confirms that all the communication apparatuses that are able to perform communication have had turns transmitting data, the first function comprising:
when the state of the vehicle (40) is switched, applying a size of data set such that a first total amount of data becomes fixed regardless of the state of the vehicle (40) in a predetermined period, as a size of data to be transmitted by the own apparatus, the predetermined period being a period from when the beacon signal is transmitted until when the next beacon signal is transmitted, the first total amount of the data being a total amount of data to be transmitted by all the communication apparatuses that are able to perform communication,
when the size of the data to be transmitted is larger than the applied size, transmitting the data after reducing the size of the data to the applied size; and
when the size of the data to be transmitted is smaller than the applied size, transmitting the data after providing data as padding to the data until the size of the data becomes the applied size.

15. A non-transitory storage medium of a management apparatus in an in-vehicle network system storing instructions that are executable by one or more processors included in a processing circuit of the management apparatus and that cause the one or more processors to perform a second function comprising:
after transmitting a beacon signal, transmitting the beacon signal again when the management apparatus confirms that all communication apparatuses that are able to perform communication have had turns transmitting data;
when a state of a vehicle (40) is switched, setting a size of data to be transmitted by each of the communication apparatuses such that a second total amount of data becomes fixed regardless of the state of the vehicle in the predetermined period, the second total amount of the data being a total amount of data to be transmitted by a plurality of the communication apparatuses in the in-vehicle network system; and
transmitting information indicating the set size of the data to the communication apparatus according to claim 1.
